(19) Europäisches Patentamt
European Patent Office
Office européen des brevets

(11) **EP 2 237 103 A1**

(12) **EUROPEAN PATENT APPLICATION**
published in accordance with Art. 153(4) EPC

(43) Date of publication:
**06.10.2010 Bulletin 2010/40**

(21) Application number: **08870767.4**

(22) Date of filing: **25.09.2008**

(51) Int Cl.:
***G02F 1/1335*** *(2006.01)* ***G02B 5/30*** *(2006.01)*
***G02F 1/13363*** *(2006.01)*

(86) International application number:
**PCT/JP2008/067313**

(87) International publication number:
**WO 2009/090778 (23.07.2009 Gazette 2009/30)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.01.2008 JP 2008007278**

(71) Applicant: **Sharp Kabushiki Kaisha**
**Osaka-shi, Osaka 545-8522 (JP)**

(72) Inventors:
- **SAKAI, Akira**
  **Osaka-shi, Osaka 545-8522 (JP)**
- **TSUDA, Kazuhiko**
  **Osaka-shi, Osaka 545-8522 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY**

(57) The present invention provides a transflective liquid crystal display device which is produced by a simple process with minimum increase in the production cost and which achieves both high-quality reflective display and transmissive display. The present invention relates to a vertical alignment transflective liquid crystal display device for transmissive display and reflective display. The display device includes: a back-side polarizer; a liquid crystal cell; a viewing-side polarizer; a first retardation layer; and a second retardation layer. The liquid crystal cell includes a pair of substrates and a liquid crystal layer disposed between the pair of substrates. The viewing-side polarizer has an absorption axis orthogonal to an absorption axis of the back-side polarizer. The first retardation layer is disposed between the liquid crystal layer and the viewing-side polarizer at a transmissive display region and a reflective display region, satisfies $1.5 \leq Nz \leq 9.0$, has an in-plane slow axis orthogonal to the absorption axis of the viewing-side polarizer, and satisfies $20\ nm \leq Re(550) \leq 80\ nm$. The second retardation layer is disposed between the first retardation layer and the viewing-side polarizer at the reflective display region, and converts linearly polarized light incident from the viewing-side polarizer into circularly polarized light together with the first retardation layer when no voltage is applied.

Fig. 1

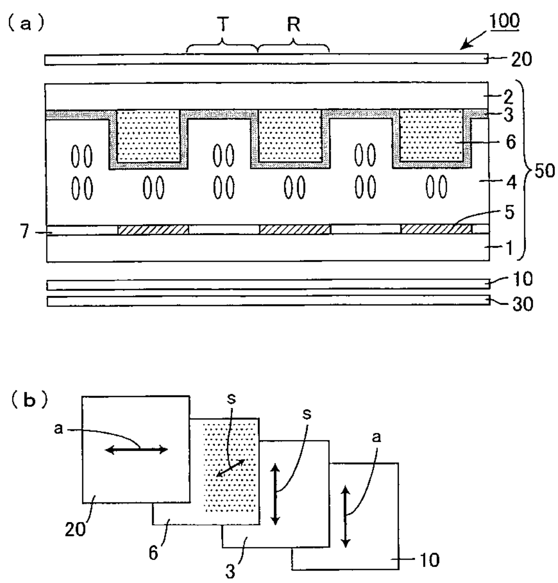


EP 2 237 103 A1

## Description

### TECHNICAL FIELD

The present invention relates to a liquid crystal display device. The present invention more specifically relates to a transflective liquid crystal display device suitable for mobile devices such as mobile phones.

### BACKGROUND ART

Liquid crystal display devices are widely used as display devices for various electronic devices such as cellular phones, computers, and televisions. In particular, TFT liquid crystal display devices (hereinafter, also referred to as "TFT-LCDs") become popular, and expansion of the TFT-LCD market is expected. Such a situation creates a demand for much improved image quality. In addition, a demand for mobile devices such as mobile phones is rapidly increasing. Thus, reflective liquid crystal display devices are focused on because they consume less power than transmissive liquid crystal display devices.

The reflective liquid crystal display devices perform display by reflecting light incident from the outside by means of reflectors, and do not require backlights. Thus, they consume less power and drive for longer time than the transmissive liquid crystal display devices. In contrast, display quality is deteriorated at dark place where light intensity is low because the reflective liquid crystal display devices perform display by utilizing natural light.

In order to solve this problem, there are devised transflective liquid crystal display devices. In such devices, a transmissive portion is disposed at part of the reflector so that both a reflective display region and a transmissive display region co-exist and a backlight is disposed on the back side. Thus, the transflective liquid crystal display devices achieve characteristics of both reflective and transmissive liquid crystal display devices. Such devices achieve good display quality at both bright and dark places. In particular, there are disclosed transflective liquid crystal display devices provided with a vertical-alignment (VA) liquid crystal cell in order to easily achieve a high contrast ratio (Patent Documents 1 and 2).

In order to achieve a normally black reflective liquid crystal display device which displays a black screen when no voltage is applied, light immediately before being incident on the reflector is required to be in a circularly polarized state when no voltage is applied. Particularly in the case of a vertical alignment liquid crystal cell which shows substantially no retardation when no voltage is applied, the circular polarization mode is required in which the polarizing plate is a circularly polarizing plate.

Here, the circularly polarizing plate is an optical element which transmits one of right-handed circularly polarized light and left-handed circularly polarized light and absorbs or reflects the other. In general, the circularly polarizing plate is formed by the combination of a linearly polarizing plate (linear polarizer) which generates linearly polarized light from unpolarized light and a retardation layer, such as a quarter-wave plate, which converts linearly polarized light into circularly polarized light.

In the case that a transmissive display region is disposed on the reflective liquid crystal display device to provide the transflective liquid crystal display device, the viewing-side polarizing plate at the transmissive display region unavoidably serves as the circularly polarizing plate. Thus, the transmissive display region unavoidably employs the circular polarization mode. Here, transmissive display does not essentially require circular polarization and, in this case, the circularly polarizing plate is also required to be disposed on the back side so as to cancel the effect of converting linearly polarized light into circularly converted light exerted by the circularly polarizing plate disposed on the viewing side. Disadvantageously, this mode provides a narrower viewing angle and is less likely to give a good contrast ratio compared with the linear polarization mode with a common linearly polarizing plate.

Thus, there is disclosed what is called an in-cell retardation technique in which a retardation layer having a phase-converting function of converting linearly polarized light into circularly polarized light is disposed only at the reflective display region in the cell (Patent Documents 3 to 5). Such a technique is capable of employing the linear polarization mode at the transmissive display region, and thus is capable of solving the aforementioned problem. In addition, this technique is advantageous in order to slim down the liquid crystal display device and to give high durability to the liquid crystal display device.

Even in the case of the conventional in-cell retardation technique, the transflective liquid crystal display device still faces the following problems (1) and (2).

(1) The in-cell retardation layer disposed only at the reflective display region in the cell is generally made of a liquid crystalline material. Wavelength dispersion due to birefringence of the liquid crystalline material causes wavelength dispersion in the function of converting linearly polarized light into circularly polarized light, resulting in coloring upon reflective display. In order to prevent this problem, there is disclosed a technique of patterning in-cell retardation layers each having a retardation optimized to a color (RGB) of a color filter substrate (Patent Documents 5 and 6) ; however, this technique requires complicated patterning of the in-cell retardation layers and causes an increase in

the production cost.

(2) In general, a retardation layer is also required at the transmissive display region in order to provide a wider viewing angle. In the case that the retardation layer for transmissive display is also formed in the in-cell mode so as to slim down the liquid crystal display device and to give high durability to the liquid crystal display device, the production cost further increases. It is known that a biaxial retardation layer having a minimum principal refractive index in the normal direction of the substrate is effective in imparting a wider viewing angle to the vertical alignment transmissive liquid crystal display device. There is disclosed a technique of forming the biaxial retardation layer by application of the layer to the substrate (Patent Documents 7 and 8).

[Patent Document 1]
Japanese Kokai Publication 2000-29010
[Patent Document 2]
Japanese Kokai Publication 2000-35570
[Patent Document 3]
Japanese Kokai Publication 2003-322857
[Patent Document 4]
Japanese Kokai Publication 2004-4494
[Patent Document 5]
WO 2007/063629
[Patent Document 6]
Japanese Kokai Publication 2004-240102
[Patent Document 7]
Japanese Kohyo Publication 2005-513241
[Patent Document 8]
Japanese Kokai Publication 2006-323069

DISCLOSURE OF THE INVENTION

The present invention is devised in consideration of the aforementioned situations. An object of the present invention is to provide a transflective liquid crystal display device which achieves both high-quality reflective display and transmissive display and is produced by a simple process with minimum increase in the production cost.

The present inventors have studied a transflective liquid crystal display device for transmissive display and reflective display, comprising: a back-side polarizer; a liquid crystal cell having a pair of substrates and a liquid crystal layer disposed between the substrates; and a viewing-side polarizer having the absorption axis orthogonal to the absorption axis of the back-side polarizer. Thus, they have focused on the orthogonality between the back-side polarizer and the viewing-side polarizer.

As a result, the present inventors have found the following. That is, in the case of aligning liquid crystal molecules in the liquid crystal layer perpendicular to the substrate when no voltage is applied, the orthogonality between the back-side polarizer and the viewing-side polarizer is maintained at the transmissive display region and the reflective display region, and thus a high contrast ratio is achieved in the frontal direction; while, in this case, the orthogonality between the back-side polarizer and the viewing-side polarizer is not maintained in oblique directions, and thus the liquid crystal display device has a narrow viewing angle.

The present inventors have further found the following. That is, in the case of disposing a first retardation layer having an Nz coefficient satisfying $1.5 \leq Nz \leq 9.0$ at a wavelength of 550 nm; having an in-plane slow axis orthogonal to the absorption axis of the viewing-side polarizer; and having an in-plane retardation Re(550) satisfying $20\ nm \leq Re(550) \leq 80\ nm$ at a wavelength of 550 nm, between the liquid crystal layer and the viewing-side polarizer at a transmissive display region and a reflective display region, the orthogonality between the back-side polarizer and the viewing-side polarizer is maintained in the frontal direction, while the orthogonality between the back-side polarizer and the viewing-side polarizer is also maintained in oblique directions, at the transmissive display region by means of the first retardation layer when no voltage is applied. Thus, the liquid crystal display device has a wide viewing angle upon transmissive display, and achieves high-quality transmissive display.

In addition, the present inventors have found the following. That is, in the case of disposing a second retardation layer converting linearly polarized light incident from the viewing-side polarizer into circularly polarized light together with the first retardation layer when no voltage is applied between the first retardation layer and the viewing-side polarizer at the reflective display region, light is allowed to be in a circularly polarized state immediately before being incident on a reflective member, such as a reflector, along a wide wavelength range at the reflective display region by means of the first and second retardation layers when no voltage is applied. Thus, coloring upon reflective display is reduced and a contrast ratio is improved in the frontal direction, resulting in high-quality reflective display.

Further, the present inventors have found that minimization of the number of patterning for forming the first and second retardation layers enables simplification of the production processes and reduction in the production cost.
Thereby, the present inventors have arrived at the solution of the aforementioned problems, and completed the present invention.

One aspect of the present invention relates to a transflective liquid crystal display device for transmissive display and reflective display, comprising: a back-side polarizer; a liquid crystal cell; a viewing-side polarizer; a first retardation layer; and a second retardation layer (hereinafter, also referred to as the "first liquid crystal display device").
The liquid crystal cell includes a pair of substrates and a liquid crystal layer disposed between the pair of substrates, and the liquid crystal layer contains liquid crystal molecules aligned perpendicular to the substrates when no voltage is applied.
The viewing-side polarizer has an absorption axis orthogonal to the absorption axis of the back-side polarizer.
The first retardation layer is disposed between the liquid crystal layer and the viewing-side polarizer at a transmissive display region and a reflective display region; has an Nz coefficient satisfying $1.5 \leq Nz \leq 9.0$ at a wavelength of 550 nm; has an in-plane slow axis orthogonal to the absorption axis of the viewing-side polarizer; and has an in-plane retardation Re(550) satisfying $20\ nm \leq Re(550) \leq 80\ nm$ at a wavelength of 550 nm.
The second retardation layer is disposed between the first retardation layer and the viewing-side polarizer at the reflective display region; and converts linearly polarized light incident from the viewing-side polarizer into circularly polarized light together with the first retardation layer when no voltage is applied.

The first liquid crystal display device of the present invention is a transflective liquid crystal display device for transmissive display and reflective display, comprising a back-side polarizer; a liquid crystal cell having a pair of substrates and a liquid crystal layer disposed between the pair of substrates; and a viewing-side polarizer having an absorption axis orthogonal to the absorption axis of the back-side polarizer.
The term "polarizer" herein represents an element which converts natural light into linearly polarized light. The back-side polarizer is a polarizer disposed closer to the back side than the liquid crystal cell. The viewing-side polarizer is a polarizer disposed closer to the viewing side than the liquid crystal cell. The back-side polarizer and the viewing-side polarizer are disposed so that the absorption axes thereof are orthogonal to each other (disposed in a crossed Nicols state). Here, the first liquid crystal display device of the present invention is not limited to those in which the absorption axis of the viewing-side polarizer is perfectly orthogonal to the absorption axis of the back-side polarizer. The angle formed by the absorption axis of the viewing-side polarizer and the absorption axis of the back-side polarizer may deviate from 90° as long as a high contrast ratio is achieved in the frontal direction.
The term "liquid crystal layer (switching liquid crystal layer)" herein represents one in which the alignment of the liquid crystal molecules in the liquid crystal layer is electrically changed.
The term "transmissive display" herein represents a display mode in which illumination light incident on the liquid crystal cell from the backlight through the back-side polarizer is transmitted to the viewing side through the viewing-side polarizer to perform display. The term "transmissive display region" herein represents a region used for transmissive display.
The term "reflective display" herein represents a display mode in which natural light incident on the liquid crystal cell from the viewing side through the viewing-side polarizer is reflected to the viewing side by the reflective member (e.g. reflector) to perform display. The term "reflective display region" herein represents a region used for reflective display.

In the first liquid crystal display device, the liquid crystal molecules in the liquid crystal layer are aligned perpendicular to the substrate when no voltage is applied. This means that the liquid crystal layer is a vertical alignment liquid crystal layer in which liquid crystal molecules are aligned perpendicular to the substrate when no voltage is applied. Examples of such a display mode for liquid crystal display devices include VA modes, e.g. multi-domain vertical alignment (MVA) modes, patterned vertical alignment (PVA) modes, biased vertical alignment (BVA) modes, and reverse TN modes. The liquid crystal layer generally includes a nematic liquid crystal.
In the liquid crystal display device of the present invention, the back-side polarizer and the viewing-side polarizer are disposed in a crossed Nicols state, and the liquid crystal layer does not show birefringence when no voltage is applied. That is, the liquid crystal display device of the present invention is a normally black mode liquid crystal display device which is likely to achieve a high contrast ratio. Here, the liquid crystal molecules in the liquid crystal layer are not required to be aligned perfectly perpendicular to the substrates when no voltage is applied, and may be aligned with slight inclination for the purpose of a more rapid response rate, for example. Alternatively, the liquid crystal molecules may be inclined due to a structure for controlling the alignment in order to achieve a multi-domain mode.

The first liquid crystal display device comprises, between the liquid crystal layer and the viewing-side polarizer at the transmissive display region, a first retardation layer which has an Nz coefficient satisfying $1.5 \leq Nz \leq 9.0$ at a wavelength of 550 nm; has an in-plane slow axis orthogonal to the absorption axis of the viewing-side polarizer; and has an in-plane retardation Re(550) satisfying $20\ nm \leq Re(550) \leq 80\ nm$ at a wavelength of 550 nm. Thus, the orthogonality between the back-side polarizer and the viewing-side polarizer is maintained in the frontal direction at the transmissive region when no voltage is applied, while the orthogonality between the back-side polarizer and the viewing-side polarizer is maintained even in oblique directions. As a result, the liquid crystal display device is allowed to have a wider viewing

angle upon transmissive display. In addition, the first retardation layer is disposed on both the transmissive display region and the reflective display region. Thus, the first retardation layer may be formed without patterning, resulting in prevention of an increase in the production cost.

The term "retardation layer" herein represents a layer having optical anisotropy, and is synonymous with the terms such as a retardation film, a retardation plate, an optically anisotropic layer, a birefringent layer, and a birefringent medium.

The Nz coefficient is defined as Nz = (n1x-n1z) / (n1x-n1y), wherein n1x and n1y (n1x > n1y) each represent a principal refractive index in the in-plane direction of the first retardation layer and n1z represents a principal refractive index in the normal direction thereof.

If the Nz coefficient of the first retardation layer is less than 1.5, the Nz coefficient is greater than 9.0, the Re(550) is less than 20 nm, or the Re(550) is larger than 80 nm, the viewing angle upon transmissive display may not be sufficiently widened. In order to further widen the viewing angle upon transmissive display, the first retardation layer more preferably satisfies 2 ≤ Nz ≤ 7 and 40 nm ≤ Re(550) ≤ 60 nm. In order to prevent an increase in the production cost, the first retardation layer is preferably formed without patterning. The first retardation layer may have a monolayer structure or a multilayer structure. In order to further prevent an increase in the production cost, it preferably has a monolayer structure.

The first liquid crystal display device comprises, at the reflective display region, a first retardation layer between the liquid crystal layer and the viewing-side polarizer; and a second retardation layer between the first retardation layer and the viewing-side polarizer. The first retardation layer has an Nz coefficient satisfying 1.5 ≤ Nz ≤ 9.0 at a wavelength of 550 nm; has an in-plane slow axis orthogonal to the absorption axis of the viewing-side polarizer; and has an in-plane retardation Re(550) satisfying 20 nm ≤ Re(550) ≤ 80 nm at a wavelength of 550 nm. The second retardation layer converts linearly polarized light incident from the viewing-side polarizer into circularly polarized light together with the first retardation layer when no voltage is applied.

Thus, as shown in Figs. 11(a) and 11(b), for example, conversion of linearly polarized light (P0) incident from the viewing-side polarizer into circularly polarized light (P2) is performed by two polarization-converting steps (P0 to P1 and P1 to P2) at the reflective display region with the first and second retardation layers; thereby, as shown in Fig. 11(c), the liquid crystal display device achieves self-compensation of the influence of wavelength dispersion due to birefringence of the first and second retardation layers. As a result, light immediately before being incident on a reflective member, such as a reflector, is allowed to be in a circularly polarized state at a wide range of wavelengths. Consequently, coloring upon reflective display is reduced and a higher contrast ratio is achieved in the frontal direction. In addition, an increase in the production cost is prevented by, for example, minimization of the number of patterning required for forming the second retardation layer.

In the present invention, the second retardation layer is disposed closer to the viewing side than the first retardation layer. If the second retardation layer is disposed closer to the back side than the first retardation layer, for example, the first retardation layer has substantially no polarization-converting effects on linearly polarized light incident from the viewing-side polarizer at least in the normal direction at the reflective display region. Thus, the first retardation layer is not capable of converting linearly polarized light incident from the viewing-side polarizer into circularly polarized light together with the second retardation layer.

The second retardation layer may be one converting light into circularly polarized light together with the first retardation layer and the liquid crystal layer when no voltage is applied as long as it is capable of converting light into circularly polarized light together with the first retardation layer which is disposed closer to the back side than the second retardation layer when no voltage is applied. That is, the second retardation layer may convert light into circularly polarized light together with the first retardation layer which is disposed closer to the back side than the second retardation layer and the liquid crystal layer which shows slight birefringence when no voltage is applied.

In order to prevent an increase in the production cost, the second retardation layer is preferably formed by one patterning step. The second retardation layer may also have a monolayer structure or a multilayer structure. In order to prevent an increase in the production cost, the second retardation layer preferably has a monolayer structure.

The in-plane retardation Re(550) at a wavelength of 550 nm is defined similarly to the below-mentioned R1xy and R2xy.

Another aspect of the present invention relates to a transflective liquid crystal display device for transmissive display and reflective display, comprising: a back-side polarizer; a liquid crystal cell; a viewing-side polarizer; a first retardation layer; and a second retardation layer (hereinafter, also referred to as the "second liquid crystal display device") .

The liquid crystal cell includes a pair of substrates and a liquid crystal layer disposed between the pair of substrates, and the liquid crystal layer contains liquid crystal molecules aligned perpendicular to the substrates when no voltage is applied.

The viewing-side polarizer has an absorption axis orthogonal to the absorption axis of the back-side polarizer.

The first retardation layer is disposed between the liquid crystal layer and the back-side polarizer at a transmissive display region and a reflective display region; has an Nz coefficient satisfying 1.5 ≤ Nz ≤ 9.0 at a wavelength of 550 nm; has an in-plane slow axis parallel to the absorption axis of the viewing-side polarizer; and has an in-plane retardation Re(550) satisfying 20 nm ≤ Re(550) ≤ 80 nm at a wavelength of 550 nm.

The second retardation layer is disposed between the first retardation layer and the viewing-side polarizer at the reflective

display region; and converts linearly polarized light incident from the viewing-side polarizer into circularly polarized light together with the first retardation layer when no voltage is applied.

The second liquid crystal display device of the present invention is similar to the first liquid crystal display device of the present invention except that the first retardation layer is disposed at a different site and thus the device has a different positional relationship between the in-plane slow axis of the first retardation layer and the absorption axis of the viewing-side polarizer. Thus, the second liquid crystal display device of the present invention provides the same effects as those provided by the first liquid crystal display device. In addition, embodiments and descriptions about the first liquid crystal display device can be appropriately applied to the second liquid crystal display device.

The first and second liquid crystal display devices of the present invention are not especially limited as long as they each include the back-side polarizer, the liquid crystal cell, the viewing-side polarizer, the first retardation layer, and the second retardation layer as the constituent components.

In order to perform transmissive display, the first and second liquid crystal display devices of the present invention each are generally provided with a backlight (illumination backlight) at a position closer to the back side than the back-side polarizer. Also, in order to perform reflective display, the first liquid crystal display device of the present invention is generally provided with a reflective member between the back-side polarizer and the liquid crystal layer; the second liquid crystal display device of the present invention is generally provided with a reflective member between the back-side polarizer and the first retardation layer.

In the first liquid crystal display device of the present invention, the in-plane slow axis of the first retardation layer is not required to be perfectly orthogonal to the absorption axis of the viewing-side polarizer. The angle formed by the in-plane slow axis of the first polarizer and the absorption axis of the viewing-side polarizer may deviate from 90° by up to about ±5° as long as a high contrast ratio is achieved in the frontal direction.

In the second liquid crystal display device of the present invention, the in-plane slow axis of the first retardation layer is not required to be perfectly parallel to the absorption axis of the viewing-side polarizer. The angle formed by the in-plane slow axis of the first retardation layer and the absorption axis of the viewing-side polarizer may deviate from 0° by up to about ±5° as long as a high contrast ratio is achieved in the frontal direction.

In the first and second liquid crystal display devices of the present invention, the first and second retardation layers are not required to convert linearly polarized light into perfectly circularly polarized light. The circularly polarized light may not be perfectly circularly polarized light as long as a high contrast ratio is achieved in the frontal direction.

Preferable embodiments of the first and second liquid crystal display devices of the present invention are mentioned in more detail below.

At least one of the first retardation layer and the second retardation layer is preferably disposed inside the liquid crystal cell. In other words, at least one of the first retardation layer and the second retardation layer is preferably an in-cell retardation layer. The in-cell retardation technique enables production of a thin and highly durable liquid crystal display device.

In the case of disposing layers such as a color filter layer and a thin film transistor (TFT) element layer on the substrate of the liquid crystal cell, patterning of the retardation layers can be performed simultaneously with formation of the layers such as the color filter layer and the TFT element layer; thus, patterning of the second retardation layer is easily performed.

The first and second liquid crystal display devices each preferably satisfy the following formula (1):

$$44+0.2\times R1xy \leq \alpha \leq 54+0.2\times R1xy \quad (1)$$

wherein R1xy (nm) represents the in-plane retardation of the first retardation layer at a wavelength of 550 nm and is defined as R1xy = (n1x-n1y)×d1, wherein n1x and n1y (n1x > n1y) each represent a principal refractive index of the first retardation layer in the in-plane direction and d1 represents the thickness thereof; and $\alpha$ (°) represents the angle formed by the in-plane slow axis of the first retardation layer and the in-plane slow axis of the second retardation layer.

The first and second liquid crystal display devices each preferably satisfy the following formula (2):

$$1.015\times R1xy+100 \leq R2xy \leq 1.015\times R1xy+125 \quad (2)$$

wherein R1xy (nm) represents the in-plane retardation of the first retardation layer at a wavelength of 550 nm and is as defined above; and R2xy represents the in-plane retardation of the second retardation layer at a wavelength of 550 nm and is defined as R2xy (nm) = (n2x-n2y)×d2, wherein n2x and n2y (n2x > n2y) each represent a principal refractive index of the second retardation layer in the in-plane direction and d2 represents the thickness thereof.

The formulas (1) and (2) are derived as follows. Fig. 12 is a schematic perspective view showing the multilayer structure of each of the first and second liquid crystal display devices of the present invention at the reflective display

region.
The first and second liquid crystal display devices of the present invention each have a structure in which a viewing-side polarizer 20, a second retardation layer 6, a first retardation layer 3, and a reflective member (reflector) 5 are stacked in this order at the reflective display region. Here, the liquid crystal cell is omitted in Fig. 12 because it shows no birefringence when no voltage is applied.
Light for reflective display is incident on the viewing-side polarizer 20; passes through the second retardation layer 6 and then the first retardation layer 3; is reflected by the reflective member 5; passes through the first retardation layer 3 and then the second retardation layer 6; and then again travels toward the viewing-side polarizer 20. Here, the measurement was performed with a simulator for designing LCD (LCD Master, Shintech, Inc.) in order to determine the optimum values of the angle $\alpha$ (°) formed by the in-plane slow axis s of the first retardation layer 3 and the in-plane slow axis s of the second retardation layer 6 and the R2xy (nm) of the second retardation layer 6 when the light is blocked by the viewing-side polarizer 20 while R1xy (nm) of the first retardation layer 3 was varied.
Figs. 13 and 14 show the results.

As shown in Fig. 13, the optimum relationship between R1xy (nm) of the first retardation layer 3 and the angle $\alpha$ (°) is expressed as $\alpha \approx 0.2\times\text{R1xy}+49$. Thus, in order to display a black screen at the reflective display region with the first and second retardation layers, the first and second liquid crystal display devices preferably satisfy $44+0.2\times\text{R1xy} \leq \alpha \leq 54+0.2\times\text{R1xy}$ (the relationship of the formula (1)) in consideration of effect uniformity, production uniformity, and the like factors. The first and second liquid crystal display devices more preferably satisfy $47+0.2\times\text{R1xy} \leq \alpha \leq 51+0.2\times\text{R1xy}$.

As shown in Fig. 14, the optimum relationship between R1xy (nm) of the first retardation layer 3 and R2xy (nm) of the second retardation layer 6 is represented as $\text{R2xy} \approx 1.015\times\text{R1xy}+115$. Thus, in order to display a black screen at the reflective display region with the first and second retardation layers, the first and second liquid crystal display devices preferably satisfy $1.015\times\text{R1xy}+100 \leq \text{R2xy} \leq 1.015\times\text{R1xy}+125$ (the relationship of the formula (2)) in consideration of effect uniformity, production uniformity, and the like factors. The first and second liquid crystal display devices more preferably satisfy $1.015\times\text{R1xy}+110 \leq \text{R2xy} \leq 1.015\times\text{R1xy}+120$.

## EFFECT OF THE INVENTION

The liquid crystal display device of the present invention achieves both high-quality reflective display and transmissive display while it is produced by a simple process with minimum increase in the production cost.

## BEST MODE FOR CARRYING OUT THE INVENTION

### (Embodiment 1)

Fig. 1(a) is a schematic cross-sectional view showing the structure of the liquid crystal display device according to Embodiment 1 of the present invention, and Fig. 1(b) is a schematic perspective view thereof.
The liquid crystal display device of the present embodiment is a semi-transmissive/semi-reflective (also referred to as simply "transflective" herein) liquid crystal display device 100 including a transmissive display region T and a reflective display region R.
The transmissive display region T and the reflective display region R are separately described in detail hereinbelow.

At the transmissive display region T, a transparent electrode 7 formed by a highly transmissive material (such as indium tin oxide (ITO)) is disposed on an insulating substrate 1 (such as a glass substrate). In addition, a first retardation layer 3 formed by a material such as a polymeric liquid crystalline material and a transparent electrode (not shown) formed by a highly transmissive material (such as ITO) are disposed in this order on an insulating substrate 2 (such as a glass substrate). Further, a switching liquid crystal layer 4 formed by a liquid crystal material with negative dielectric constant anisotropy is disposed between the substrate 1 and the substrate 2.

At the reflective display region R, a reflective member 5 formed by a highly reflective material (such as Al and Ta) and a transparent electrode (not shown) formed by a highly transmissive material (such as ITO) are disposed in this order on the insulating substrate 1 (such as a glass substrate). In addition, a second retardation layer 6 formed by a material such as a polymeric liquid crystalline material, a first retardation layer 3 formed by a material such as a polymeric liquid crystalline material, and a transparent electrode (not shown) formed by a highly transmissive material (such as ITO) are disposed in this order on the insulating substrate 2 (such as a glass substrate). Further, a switching liquid crystal layer 4 formed by a liquid crystal material with negative dielectric constant anisotropy is disposed between the substrate 1 and the substrate 2 at half the thickness of the liquid crystal layer on the transmissive display region T.

The present invention will be mentioned in more detail referring to the drawings in the following examples, but is not limited to these examples.

<Example 1>

Fig. 2(a) is a cross-sectional view showing the structure of the liquid crystal display device according to Example 1 of the present invention, and Fig. 2(b) is a schematic perspective view showing the placement of the components.

(Production of TFT substrate)

Gate lines and source lines are disposed on a non-birefringent transparent glass substrate 1a so that the extending direction of the gate lines and that of the source lines are orthogonal to each other. TFT elements are disposed on the intersections. A transparent electrode 7a for transmissive display and a reflective electrode 5a for reflective display each are coupled to a drain electrode of the TFT element. A vertical alignment film is applied to the whole surface, and thereby the TFT substrate is completed.
Here, the TFT substrate is produced by a conventionally known method, and thus the specific description of the production is omitted. The components other than the glass substrate 1a, the transparent electrode 7a for transmissive display, and the reflective electrode 5a for reflective display are not shown in the figure.

(Production of color filter substrate)

Color filter materials are applied to a non-birefringent transparent glass substrate 2a in a predetermined pattern by a known method. Thus, red (R), green (G), and blue (B) color layers 8Ra, 8Ga, and 8Ba are disposed on each pixel. A material for an alignment film (SE-3140, Nissan Chemical Industries, Ltd.) is applied to the color layers 8Ra, 8Ga, and 8Ba by spin coating or flexography, and then is fired and rubbed. A polymeric liquid crystal solution is applied to the alignment film by spin coating (for example, for 30 seconds at 700 rm). The polymeric liquid crystal used here is an 8-wt% solution of PLC-7023 (ADEKA Corp.) having an isotropic transition temperature of 170°C and a refractive anisotropy $\Delta n$ of 0.21. The solvent is a mixed solution of cyclohexanone and methylethyl ketone. The polymeric liquid crystal layer is pre-baked for 1 minute at 80°C, and is further heated for 30 minutes at 180°C which is higher than the isotropic transition temperature (170°C) of the polymeric liquid crystal. Then, the polymeric liquid crystal is gradually cooled down so as to be aligned.
An acrylic photo-sensitive resin (NN-525, JSR Corp.) is applied by spin coating (for example, for 30 seconds at 700 rm) as a material for a protecting layer. The substrate is pre-baked for 3 minutes at 80°C, and then is exposed to light with a photo mask (for example, at an exposure intensity of 140 $mJ/cm^2$, which is the value measured with an ultraviolet actinometer having sensitivity at 350 nm). The protecting layer is immersed in an alkaline developer for 90 seconds at room temperature. Thus, the protecting layer is developed and left only at the reflective display region. Here, the acrylic photo-sensitive resin is a negative one, and thus the photo mask is required to be formed so that the reflective display region is exposed to light.
In order to perfectly cure the protecting layer, post-exposure is performed at an exposure intensity of 2000 $mJ/cm^2$. Then, the substrate is immersed in an etching solution containing N-methyl-2-pyrorridinone for 30 minutes at room temperature so as to be etched. This substrate is dried for 3 minutes at 80°C. Thereby, the second retardation layer 6a comprising the polymeric liquid crystal and the protecting layer 9a comprising the acrylic photo-sensitive resin are formed only at the reflective display region R.
Here, the protecting layer 9a also serves as a cell-thickness-adjusting layer at the reflective display region R. The second retardation layer 6a is adjusted to have the in-plane slow axis with an azimuth angle of 30° and to satisfy a retardation R2xy = 170 nm. The sum of the thicknesses of the second retardation layer 6a and the protecting layer 9a is adjusted to 1.6 $\mu$m.
The terms "azimuth" and "azimuth angle" herein represents an angle measured under the following conditions in the case that the liquid crystal display device is viewed in the frontal direction: the 3 o'clock position is defined as 0°; the counterclockwise direction as positive; and the clockwise direction as negative.
A coating solution for an alignment film AL-1 is applied to the protecting layer 9a and the color layers 8Ra, 8Ga, and 8Ba with a wire bar coater #14. The solution is dried by 60°C hot air for 60 seconds, and then further dried by 90°C hot air for 150 seconds so as to provide a 1.0-$\mu$m-thickness alignment film. Then, the alignment layer is continuously rubbed.
An ultraviolet absorber (shown in formula (3)) which enables control of polymerization is added to a coating solution for forming a first retardation layer (see the following for preparation of coating solution) at a ratio of 0.5% by weight to solids content to prepare a coating solution of a mixed liquid crystal composition. The prepared coating solution of a mixed liquid crystal composition is applied to the rubbed surface with a wire bar coater #3, and then heated, dried, and matured for 1 minute at 100°C to give an optically anisotropic layer having a uniform liquid crystal phase. Immediately after matured, the optically anisotropic layer is irradiated with polarized UV (illuminance: 200 $mW/cm^2$, irradiation amount: 200 $mJ/cm^2$) by the use of a polarized UV irradiating apparatus (POLUV-1) under a nitrogen atmosphere with an oxygen

concentration of 0.3% or less. Thereby, a first retardation layer 3a is formed. The first retardation layer 3a is adjusted to have the in-plane slow axis s with an azimuth angle of 90° and to satisfy a retardation R1xy = 50 nm and a biaxial parameter Nz = 5.4.

Further, a transparent electrode (not shown) and a vertical alignment film (not shown) are applied to the first retardation layer 3a by a known method. Thereby, the color filter substrate is completed.

(Preparation of coating solution for forming first retardation layer)

The coating solution for forming the first retardation layer is prepared as follows: the following composition is prepared; and the composition is filtrated with a polypropylene filter having a pore size of 0.2 μm. The obtained solution is used as the coating solution for forming the first retardation layer.

(Composition of coating solution for forming first retardation layer)

Rod-shaped liquid crystal: 28.37% by weight (Paliocolor LC242, BASF Japan Ltd.)
Chiral agent: 3.30% by weight (Paliocolor LC756, BASF Japan Ltd.)
Photo-polymerization initiator: 1.32% by weight (following formula (1))
Additive: 0.01% by weight (following formula (2)) Methylethyl ketone: 67.00% by weight

[Chem. 1]

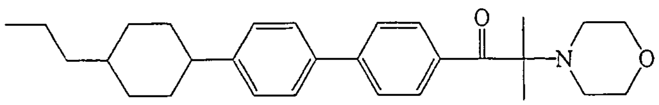

(1)

[Chem. 2]

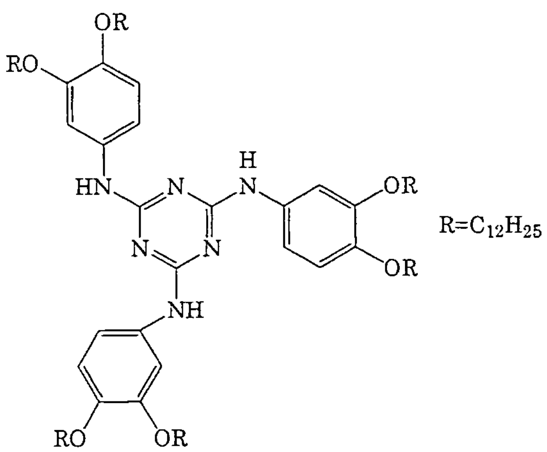

(2)

[Chem. 3]

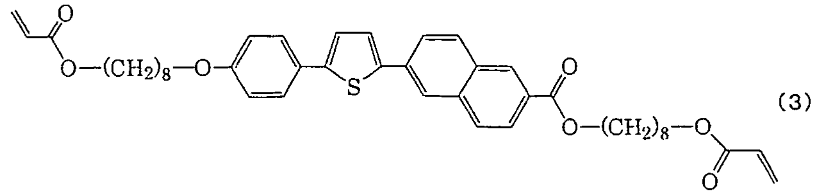

(3)

(Production of liquid crystal cell)

The TFT substrate and the color filter substrate prepared above are bonded together. Then, a liquid crystal material for vertical alignment with negative dielectric anisotropy ($\Delta n$ = 0.10) is injected so that the cell gap at the transmissive display region T is 3.2 μm (since the sum of the thicknesses of the second retardation layer 6a and the protecting layer 9a is 1.6 μm, the cell gap at the reflective display region R is 3. 2-1. 6 = 1. 6 μm). Thereby, a transflective liquid crystal cell 50a is produced which has a retardation of 320 nm at the transmissive display region T and a retardation of 160 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10a having the absorption axis with an azimuth of 90° is bonded to the back side of the liquid crystal cell 50a produced above, and a polarizer 20a having the absorption axis with an azimuth of 0° is bonded to the viewing side of the liquid crystal cell 50a. Then, an illumination backlight 30a is disposed on the back side of the polarizer 10a, and thereby a liquid crystal display device is produced. This device is used as a liquid crystal display device 100a of Example 1.
The polarizers 10a and 20a each are a commercially available polarizer (SEG1224, Nitto Denko Corp.). The polarizer 10a has a structure in which a protecting layer (TAC film), a polarizer (back-side polarizer), a protecting layer (TAC film), and a sticking layer are stacked in this order. The polarizer 20a is a modified version of the commercially available polarizer. Specifically, a protecting layer (TAC film) at the sticking-layer side is removed, and a protecting layer, a polarizer (viewing-side polarizer), and a sticking layer are stacked in this order.

<Example 2>

Fig. 3 is a schematic cross-sectional view showing the structure of the liquid crystal display device according to Example 2 of the present invention, and Fig. 3(b) is a schematic perspective view showing the placement of the components.
Except that the azimuth angle of the in-plane slow axis s of the second retardation layer 6b is changed to -30°, the liquid crystal display device same as that in Example 1 is produced, and used as a liquid crystal display device 100b of Example 2.

<Example 3>

Fig. 4 is a schematic cross-sectional view showing the structure of the liquid crystal display device according to Example 3 of the present invention, and Fig. 4(b) is a schematic perspective view showing the placement of the components.

(Production of TFT substrate)

Gate lines and source lines are disposed on a non-birefringent transparent glass substrate 1c so that the extending direction of the gate lines and that of the source lines are orthogonal to each other. TFT elements are disposed on the intersections. A transparent electrode 7c for transmissive display and a reflective electrode 5c for reflective display each are coupled to a drain electrode of the TFT element. A vertical alignment film is applied to the whole surface, and thereby a TFT substrate is completed.
Here, the TFT substrate is produced by a conventionally known method, and thus the specific description of the production is omitted. The components other than the glass substrate 1c, the transparent electrode 7c for transmissive display, and

the reflective electrode 5c for reflective display are not shown in the figure.

(Production of color filter substrate)

Color filter materials are applied to a non-birefringent transparent glass substrate 2c in a predetermined pattern by a known method. Thus, red (R), green (G), and blue (B) color layers 8Rc, 8Gc, and 8Bc are disposed on each pixel. By the same method as in Example 1, a second retardation layer 6c and a protecting layer 9c are formed on the color layers 8Rc, 8Gc, and 8Bc only at the reflective display region R.
Here, the protecting layer 9c also serves as a cell-thickness-adjusting layer at the reflective display region R. The second retardation layer 6c is adjusted to have the in-plane slow axis with an azimuth angle of 33° and to satisfy a retardation R2xy = 155 nm. The sum of the thicknesses of the second retardation layer 6c and the protecting layer 9c is adjusted to 1.85 $\mu$m.
By the same method as in Example 1, a first retardation layer 3c is formed on the protecting layer 9c and the color layers 8Rc, 8Gc, and 8Bc. The first retardation layer 3c is adjusted to have the in-plane slow axis with an azimuth angle of 90° and to satisfy a retardation R1xy = 40 nm and a biaxial parameter Nz = 7.8.
Further, a transparent electrode (not shown) and a vertical alignment film (not shown) are applied to the first retardation layer 3c by a known method. Thereby, the color filter substrate is completed.

(Production of liquid crystal cell)

The TFT substrate and the color filter substrate prepared above are bonded together. Then, a liquid crystal material for vertical alignment with negative dielectric anisotropy ($\Delta n$ = 0.10) is injected so that the cell gap at the transmissive display region T is 3.7 $\mu$m (since the sum of the thicknesses of the second retardation layer 6c and the protecting layer 9c is 1.85 $\mu$m, the cell gap at the reflective display region R is 3.7-1.85 = 1.85 $\mu$m). Thereby, a transflective liquid crystal cell 50c is produced which has a retardation of 370 nm at the transmissive display region T and a retardation of 185 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10c having the absorption axis with an azimuth of 90° is bonded to the back side of the liquid crystal cell 50c produced above, and a polarizer 20c having the absorption axis with an azimuth of 0° is bonded to the viewing side. Then, an illumination backlight 30c is disposed on the back side of the polarizer 10c, and thereby a liquid crystal display device is produced. This device is used as a liquid crystal display device 100c of Example 3.
The polarizers 10c and 20c each are a commercially available polarizer (SEG1224, Nitto Denko Corp.). The polarizer 10c has a structure in which a protecting layer, a polarizer (back-side polarizer), a protecting layer, and a sticking layer are stacked in this order. The polarizer 20c is a modified version of the commercially available polarizer. Specifically, a protecting layer (TAC film) at the sticking-layer side is removed, and a protecting layer, a polarizer (viewing-side polarizer), and a sticking layer are stacked in this order.

<Example 4>

Fig. 5 is a schematic cross-sectional view showing the structure of the liquid crystal display device according to Example 4 of the present invention, and Fig. 5(b) is a schematic perspective view showing the placement of the components.

(Production of TFT substrate)

Gate lines and source lines are disposed on a non-birefringent transparent glass substrate 1d so that the extending direction of the gate lines and that of the source lines are orthogonal to each other. TFT elements are disposed on the intersections. A transparent electrode 7d for transmissive display and a reflective electrode 5d for reflective display each are coupled to a drain electrode of the TFT element. A vertical alignment film is applied to the whole surface, and thereby a TFT substrate is completed.
Here, the TFT substrate is produced by a conventionally known method, and thus the specific description of the production is omitted. The components other than the glass substrate 1d, the transparent electrode 7d for transmissive display, and the reflective electrode 5d for reflective display are not shown in the figure.

(Production of color filter substrate)

Color filter materials are applied to a non-birefringent transparent glass substrate 2d in a predetermined pattern by a known method. Thus, red (R), green (G), and blue (B) color layers 8Rd, 8Gd, and 8Bd are disposed on each pixel. By the same method as in Example 1, a second retardation layer 6d and a protecting layer 9d are formed on the color layers 8Rd, 8Gd, and 8Bd only at the reflective display region R.
Here, the protecting layer 9d also serves as a cell-thickness-adjusting layer at the reflective display region R. The second retardation layer 6d is adjusted to have the in-plane slow axis with an azimuth angle of 30° and to satisfy a retardation R2xy = 168 nm. The sum of the thicknesses of the second retardation layer 6d and the protecting layer 9d is adjusted to 1.6 μm.
By the same method as in Example 1, a first retardation layer 3d is formed on the protecting layer 9d and the color layers 8Rd, 8Gd, and 8Bd. The first retardation layer 3c is adjusted to have the in-plane slow axis with an azimuth angle of 90° and to satisfy a retardation R1xy = 55 nm, and a biaxial parameter Nz = 2.7. Further, a transparent electrode (not shown) and a vertical alignment film (not shown) are applied to the first retardation layer 3d by a known method. Thereby, the color filter substrate is completed.

(Production of liquid crystal cell)

The TFT substrate and the color filter substrate prepared above are bonded together. Then, a liquid crystal material for vertical alignment with negative dielectric anisotropy ($\Delta n$ = 0.10) is injected so that the cell gap at the transmissive display region T is 3.2 μm (since the sum of the thicknesses of the second retardation layer 6c and the protecting layer 9c is 1.6 μm, the cell gap at the reflective display region R is 3. 2-1. 6 = 1. 6 μm). Thereby, a transflective liquid crystal cell 50d is produced which has a retardation of 320 nm at the transmissive display region T and a retardation of 160 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10d having the absorption axis with an azimuth of 90° is bonded to the back side of the liquid crystal cell 50d produced above, and a polarizer 20d having the absorption axis with an azimuth of 0° is bonded to the viewing side. Then, an illumination backlight 30d is disposed on the back side of the polarizer 10d, and thereby a liquid crystal display device is produced. This device is used as a liquid crystal display device 100d of Example 4.
The polarizer 10d is one formed as follows: a 80-μm-thickness polyvinyl alcohol (PVA) film is monoaxially stretched five-fold in an iodine aqueous solution to prepare a polarizer (back-side polarizer); and a 80-μm-thickness triacetyl cellulose (TAC) film is bonded on one side of the polarizer, and a 80-μm-thickness retardation film is bonded on the other side of the polarizer. The polarizer 10d is bonded to the liquid crystal cell so that the retardation film faces the liquid crystal cell 50d. The retardation film is one prepared by lateral and longitudinal biaxial stretching of a 100-μm-thickness norbornene resin film (ARTON (registered trademark), JSR Corp.), and satisfies an in-plane retardation Rxy = 55 nm and a biaxial parameter Nz = 2. 7. The retardation film and the polarizer are bonded so that the in-plane slow axis of the retardation film and the absorption axis of the polarizer are orthogonal to each other. The polarizer 20d is the same as the polarizer 20a.

<Example 5>

Except that the retardation of the first retardation layer is changed as R1xy = 20 nm, the biaxial parameter of the first retardation layer is changed as Nz = 9, the retardation of the second retardation layer is changed as R2xy = 130 nm, and the azimuth angle of the in-plane slow axis of the second retardation layer is changed to 35°, the liquid crystal display device same as that in Example 1 is produced, and used as a liquid crystal display device of Example 5.

<Example 6>

Except that the retardation of the first retardation layer is changed as R1xy = 80 nm, the biaxial parameter of the first retardation layer is changed as Nz = 2, the retardation of the second retardation layer is changed as R2xy = 190 nm, and the azimuth angle of the in-plane slow axis of the second retardation layer is changed to 25°, the liquid crystal display device same as that in Example 1 is produced, and used as a liquid crystal display device of Example 6.

<Example 7>

Fig. 6 is a schematic cross-sectional view showing the structure of the liquid crystal display device according to Example 7 of the present invention, and Fig. 6(b) is a schematic perspective view showing the placement of the components.

(Production of TFT substrate)

Gate lines and source lines are disposed on a non-birefringent transparent glass substrate 1e so that the extending direction of the gate lines and that of the source lines are orthogonal to each other. TFT elements are disposed on the intersections. A reflector 11 is disposed at the reflective display region R, and a transparent resin layer 12 is disposed at the transmissive display region T so as to fill the step created by the reflector 11. Then, a first retardation layer 3e is disposed on the whole surface of the TFT substrate in the same manner as in Example 1. Here, the first retardation layer 3e is adjusted to have the in-plane slow axis with an azimuth angle of 0° and to satisfy a retardation R1xy = 50 nm and a biaxial parameter Nz = 5.4.
Then, transparent electrodes 7e for transmissive display and reflective display each are coupled to a drain electrode of the TFT element. A vertical alignment film is applied to the whole surface, and thereby a TFT substrate is completed.
Here, the TFT substrate is produced by a conventionally known method, and thus the specific description of the production is omitted. The components other than the glass substrate 1e, the reflector 11, the transparent resin layer 12, the first retardation layer 3e, and the transparent electrodes 7e for transmissive display and reflective display are not shown in the figure.

(Production of color filter substrate)

Color filter materials are applied to a non-birefringent transparent glass substrate 2e in a predetermined pattern by a known method. Thus, red (R), green (G), and blue (B) color layers 8Re, 8Ge, and 8Be are disposed on each pixel. By the same method as in Example 1, a second retardation layer 6e and a protecting layer 9e are formed on the color layers 8Re, 8Ge, and 8Be only at the reflective display region R.
Here, the protecting layer 9e also serves as a cell-thickness-adjusting layer at the reflective display region R. The second retardation layer 6e is adjusted to have the in-plane slow axis with an azimuth angle of -60° and to satisfy a retardation R2xy = 170 nm. The sum of the thicknesses of the second retardation layer 6d and the protecting layer 9d is adjusted to 1.6 μm.
Further, a transparent electrode (not shown) and a vertical alignment film (not shown) are applied to the protecting layer 9e and the color layers 8Re, 8Ge, and 8Be by a known method. Thereby, the color filter substrate is completed.

(Production of liquid crystal cell)

The TFT substrate and the color filter substrate prepared above are bonded together. Then, the liquid crystal material for vertical alignment with negative dielectric anisotropy ($\Delta n$ = 0.10) is injected so that the cell gap at the transmissive display region T is 3.2 μm (since the sum of the thicknesses of the second retardation layer 6e and the protecting layer 9e is 1.6 μm, the cell gap at the reflective display region R is 3.2-1.6 = 1.6 μm). Thereby, a transflective liquid crystal cell 50e is produced which has a retardation of 320 nm at the transmissive display region T and a retardation of 160 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10e having the absorption axis with an azimuth of 90° is bonded to the back side of the liquid crystal cell 50e produced above, and a polarizer 20e having the absorption axis with an azimuth of 0° is bonded to the viewing side. Then, an illumination backlight 30e is disposed on the back side of the polarizer 10e, and thereby a liquid crystal display device is produced. This device is used as a liquid crystal display device 100d of Example 7. The polarizer 10e is the same as the polarizer 20a, and the polarizer 20e is the same as the polarizer 10a.
Table 1 shows the parameters of the liquid crystal display devices in Examples 1 to 7.

[Table 1]

| | First retardation layer | | | Second retardation layer | | 44+0.2× R1xy (° ) | α (° ) | 54+0.2× R1xy (° ) | 1.015× R1xy+100 (nm) | 1.015× R1xy+125 (nm) |
|---|---|---|---|---|---|---|---|---|---|---|
| | R1xy (nm) | Nz | In-plane slow axis (° ) | R2xy (nm) | In-plane slow axis (° ) | | | | | |
| Example 1 | 50 | 5.4 | 90 | 170 | 30 | 54 | 60 | 64 | 150.75 | 175.75 |
| Example 2 | 50 | 5.4 | 90 | 170 | -30 | 54 | 60 | 64 | 150.75 | 175.75 |
| Example 3 | 40 | 7.8 | 90 | 155 | 33 | 52 | 57 | 62 | 140.6 | 165.6 |
| Example 4 | 55 | 2.7 | 90 | 168 | 30 | 55 | 60 | 65 | 155.825 | 180.825 |
| Example 5 | 20 | 9 | 90 | 130 | 35 | 48 | 55 | 58 | 120.3 | 145.3 |
| Example 6 | 80 | 2 | 90 | 190 | 25 | 60 | 65 | 70 | 181.2 | 206.2 |
| Example 7 | 50 | 5.4 | 0 | 170 | -60 | 54 | 60 | 64 | 150.75 | 175.75 |

<Comparative Example 1>

Fig. 7 is a schematic cross-sectional view showing the structure of the liquid crystal display device according to Comparative Example 1, and Fig. 7(b) is a schematic perspective view showing the placement of the components. Except that the azimuth angle of the in-plane slow axis of the second retardation layer 6f is changed to 45°, the retardation thereof is changed as R2xy = 138 nm, and the first retardation layer 3f is not disposed, the liquid crystal display device same as that in Example 1 is produced, and used as a liquid crystal display device 500f of Comparative Example 1.

<Comparative Example 2>

Fig. 8 is a schematic cross-sectional view showing the structure of the liquid crystal display device according to Comparative Example 2, and Fig. 8(b) is a schematic perspective view showing the placement of the components. Except that the retardation R2xy of the second retardation layer 6g is adjusted to 170 nm, 140 nm, and 110 nm at the R, G, and B pixels, respectively, (in other words, different types of the second retardation layers 6g are disposed), the liquid crystal display device same as that in Comparative Example 1 is produced, and used as a liquid crystal display device 500g of Comparative Example 2.
Here, the retardations R2xy of the second retardation layers 6g are controlled by the thickness of the polymeric liquid crystal film. Simultaneously, the thickness of the protecting layer 9g is adjusted so as to adjust the sum of the thicknesses of the second retardation layer 6g and the protecting layer 9g to 1.6 μm at each pixel.

<Comparative Example 3>

Fig. 9 is a schematic cross-sectional view showing the structure of the liquid crystal display device according to Comparative Example 3, and Fig. 9(b) is a schematic perspective view showing the placement of the components.

(Production of TFT substrate)

Gate lines and source lines are disposed on a non-birefringent transparent glass substrate 1h so that the extending direction of the gate lines and that of the source lines are orthogonal to each other. TFT elements are disposed

on the intersections. A transparent electrode 7h for transmissive display and a reflective electrode 5h for reflective display each are coupled to a drain electrode of the TFT element. A vertical alignment film is applied to the whole surface, and thereby the TFT substrate is completed.
Here, the TFT substrate is produced by a conventionally known method, and thus the specific description of the production is omitted. The components other than the glass substrate 1h, the transparent electrode 7h for transmissive display, and the reflective electrode 5h for reflective display are not shown in the figure.

(Production of color filter substrate)

A first retardation layer 3h is disposed on a non-birefringent transparent glass substrate 2h by the same method as in Example 1. The first retardation layer 3h is adjusted to have the in-plane slow axis with an azimuth angle of 90° and to satisfy a retardation R1xy = 50 nm and a biaxial parameter Nz = 5.4.
Then, color filter materials are applied to the first retardation layer 3h in a predetermined pattern by a known method. Thus, red (R), green (G), and blue (B) color layers 8Rh, 8Gh, and 8Bh are disposed on each pixel.
By the same method as in Example 1, a second retardation layer 6h and a protecting layer 9h are formed on the color layers 8Rh, 8Gh, and 8Bh only at the reflective display region R. Here, the protecting layer 9h also serves as a cell-thickness-adjusting layer at the reflective display region R.
The second retardation layers 6h has the in-plane slow axis with an azimuth angle of 45°, and is adjusted to have retardation R2xy of 170 nm, 140 nm, and 110 nm at the R, G, and B color pixels, respectively, (in other words, different types of the second retardation layers 6h are disposed).
Here, the retardation R2xy of the second retardation layer 6h is controlled by the thickness of the polymeric liquid crystal film. Simultaneously, the thickness of the protecting layer 9h is adjusted so as to adjust the sum of the thicknesses of the second retardation layer 6h and the protecting layer 9h to 1.6 $\mu$m at each pixel.
Further, a transparent electrode (not shown) and a vertical alignment film (not shown) are applied to the protecting layer 9h and the color layers 8Rh, 8Gh, and 8Bh by a known method. Thereby, the color filter substrate is completed.

(Production of liquid crystal cell)

The TFT substrate and the color filter substrate prepared above are bonded together. Then, a liquid crystal material for vertical alignment with negative dielectric anisotropy ($\Delta n$ = 0.10) is injected so that the cell gap at the transmissive display region T is 3.2 $\mu$m (since the sum of the thicknesses of the second retardation layer 6h and the protecting layer 9h is 1.6 $\mu$m, the cell gap at the reflective display region R is 3.2-1.6=1.6 $\mu$m). Thereby, a transflective liquid crystal cell 50e is produced which has a retardation of 320 nm at the transmissive display region T and a retardation of 160 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10h having the absorption axis with an azimuth of 90° is bonded to the back side of the liquid crystal cell 50h produced above, and a polarizer 20h having the absorption axis with an azimuth of 0° is bonded to the viewing side. Then, an illumination backlight 30h is disposed on the back side of the polarizer 10h, and thereby a liquid crystal display device is produced. This device is used as a liquid crystal display device 500h of Example 7. The polarizer 10h is the same as the polarizer 20a, and the polarizer 20h is the same as the polarizer 10a.

<Comparative Example 4>

Fig. 10 is a schematic cross-sectional view showing the structure of the liquid crystal display device according to Comparative Example 4, and Fig. 10(b) is a schematic perspective view.

(Production of TFT substrate)

Gate lines and source lines are disposed on a non-birefringent transparent glass substrate 1i so that the extending direction of the gate lines and that of the source lines are orthogonal to each other. TFT elements are disposed on the intersections. A transparent electrode 7i for transmissive display and a reflective electrode 5i for reflective display each are coupled to a drain electrode of the TFT element. A vertical alignment film is applied to the whole surface, and thereby a TFT substrate is completed.
Here, the TFT substrate is produced by a conventionally known method, and thus the specific description of the production

is omitted. The components other than the glass substrate 1i, the transparent electrode 7i for transmissive display, and the reflective electrode 5i for reflective display are not shown in the figure.

(Production of color filter substrate)

A first retardation layer 3i is disposed on a non-birefringent transparent glass substrate 2i by the same method as in Example 1. The first retardation layer 3i is adjusted to have the in-plane slow axis with an azimuth angle of 90° and to satisfy a retardation R1xy = 50 nm and a biaxial parameter Nz = 5.4.
Then, color filter materials are applied to the first retardation layer 3i in a predetermined pattern by a known method. Thus, red (R), green (G), and blue (B) color layers 8Ri, 8Gi, and 8Bi are disposed on each pixel.

By the same method as for the formation of the second retardation layer in Example 1, a third retardation layer 11i is formed on the color layers 8Ri, 8Gi, and 8Bi. Further, a second retardation layer 6i and a protecting layer 9i are formed thereon, and the third retardation layer 11i, the second retardation layer 6i, and the protecting layer 9i are simultaneously patterned. Thereby, the third retardation layer 11i, the second retardation layer 6i, and the protecting layer 9i are disposed only at the reflective display region R. Here, the protecting layer 9i also serves as a cell-thickness-adjusting layer at the reflective display region R.
The third retardation layer 11i is adjusted to have the in-plane slow axis with an azimuth angle of 75° and an in-plane retardation of 275 nm. The second retardation layer 6i is adjusted to have the in-plane slow axis with an azimuth angle of 15° and to satisfy a retardation R2xy = 138 nm. The sum of the thicknesses of the third retardation layer 11i, the second retardation layer 6i, and the protecting layer 9i are adjusted to be 1.6 μm.
Further, a transparent electrode (not shown) and a vertical alignment film (not shown) are applied to the protecting layer 9i and the color layers 8Ri, 8Gi, and 8Bi by a known method. Thereby, the color filter substrate is completed.

(Production of liquid crystal cell)

The TFT substrate and the color filter substrate prepared above are bonded together. Then, a liquid crystal material for vertical alignment with negative dielectric anisotropy ($\Delta n$ = 0.10) is injected so that the cell gap at the transmissive display region T is 3.2 μm (since the sum of the thicknesses of the third retardation layer 11i, the second retardation layer 6i, and the protecting layer 9i is 1.6 μm, the cell gap at the reflective display region R is 3.2-1.6 = 1.6 μm). Thereby, a transflective liquid crystal cell 50i is produced which has a retardation of 320 nm at the transmissive display region T and a retardation of 160 nm at the reflective display region R.
Here, the bonding of the TFT substrate and the color filter substrate and the injection of the liquid crystal material are performed by conventionally known methods; thus, the specific descriptions are omitted.

(Production of liquid crystal display device)

A polarizer 10i having the absorption axis with an azimuth of 90° is bonded to the back side of the liquid crystal cell 50i produced above, and a polarizer 20i having the absorption axis with an azimuth of 0° is bonded to the viewing side. Then, an illumination backlight 30i is disposed on the back side of the polarizer 10i, and thereby a liquid crystal display device is produced. This device is used as a liquid crystal display device 500i of Comparative Example 4. The polarizer 10i is the same as the polarizer 10a, and the polarizer 20i is the same as the polarizer 20a.

<Evaluation>

With respect to the liquid crystal display device in each of the examples and comparative examples, performances of reflective display and transmissive display were subjectively evaluated by visual observation. In addition, the production processes were also evaluated. Table 2 shows the results.
In the item "Reflective display" of "Display performance", the symbol "+" means that no coloring was observed and a contrast ratio was high, and the symbol "-" means the others.
In the item "Transmissive display" of "Display performance", the symbol "+" means that a contrast ratio was high and a viewing angle was wide, and the symbol "-" means the others.
The item "Number of retardation layer formation" is the number of application of the material for the in-cell retardation layer.
The item "Number of patterning" is the total number of patterning for forming the retardation layers and the protecting layer.

[Table 2]

| | Display performance | | Production process | |
|---|---|---|---|---|
| | Reflective display | Transmissive display | Number of retardation layer formation | Number of patterning |
| Example 1 | + | + | 2 | 1 |
| Example 2 | + | + | 2 | 1 |
| Example 3 | + | + | 2 | 1 |
| Example 4 | + | + | 2 | 1 |
| Example 5 | + | + | 2 | 1 |
| Example 6 | + | + | 2 | 1 |
| Example 7 | + | + | 2 | 1 |
| Comparative Example 1 | - | - | 1 | 1 |
| Comparative Example 2 | + | - | 3 | 3 |
| Comparative Example 3 | + | + | 4 | 3 |
| Comparative Example 4 | + | + | 3 | 1 |

The evaluation results in Table 2 show that the liquid crystal display devices in Examples 1 to 7 of the present invention each have better display performance than that of each of the liquid crystal display devices in Comparative Examples 1 and 2. Further, the liquid crystal display devices in Examples 1 to 7 of the present invention show display performance equal to or better than that of each of the liquid crystal display devices in Comparative Examples 3 and 4 even though the devices of Examples 1 to 7 each were produced by a simple method and those of Comparative Examples 3 and 4 each were produced by a complicated process.
Thus, it is proved that the present invention provides a high-quality transflective liquid crystal display device by a simple production process with minimum increase in the production cost.
In Embodiment 1 and Examples 1 to 7, both of the first and second retardation layers are the in-cell retardation layers; however, the present invention is not limited to this structure. The first and second retardation layers may not be the in-cell retardation layers, and both of the first and second retardation layers may be disposed outside the liquid crystal cell.
The present application claims priority to Patent Application No. 2008-7278 filed in Japan on January 16, 2008 under the Paris Convention and provisions of national law in a designated State. The entire contents of which are hereby incorporated by reference.

BRIEF DESCRIPTION OF THE DRAWINGS

Fig. 1(a) is a schematic cross-sectional view showing the structure of the liquid crystal display device according to Embodiment 1 of the present invention, and Fig. 1(b) is a schematic perspective view showing the placement of the components.
Fig. 2(a) is a schematic cross-sectional view showing the structure of the liquid crystal display device according to Example 1 of the present invention, and Fig. 2(b) is a schematic perspective view showing the placement of the components.
Fig. 3(a) is a schematic cross-sectional view showing the structure of the liquid crystal display device according to Example 2 of the present invention, and Fig. 3(b) is a schematic perspective view showing the placement of the components.
Fig. 4(a) is a schematic cross-sectional view showing the structure of the liquid crystal display device according to Example 3 of the present invention, and Fig. 4(b) is a schematic perspective view showing the placement of the

components.

Fig. 5(a) is a schematic cross-sectional view showing the structure of the liquid crystal display device according to Example 4 of the present invention, and Fig. 5(b) is a schematic perspective view showing the placement of the components.

Fig. 6(a) is a schematic cross-sectional view showing the structure of the liquid crystal display device according to Example 7 of the present invention, and Fig. 6(b) is a schematic perspective view showing the placement of the components.

Fig. 7(a) is a schematic cross-sectional view showing the structure of the liquid crystal display device according to Comparative Example 1, and Fig. 7(b) is a schematic perspective view showing the placement of the components.

Fig. 8(a) is a schematic cross-sectional view showing the structure of the liquid crystal display device according to Comparative Example 2, and Fig. 8(b) is a schematic perspective view showing the placement of the components.

Fig. 9(a) is a schematic cross-sectional view showing the structure of the liquid crystal display device according to Comparative Example 3, and Fig. 9(b) is a schematic perspective view showing the placement of the components.

Fig. 10(a) is a schematic cross-sectional view showing the structure of the liquid crystal display device according to Comparative Example 4, and Fig. 10(b) is a schematic perspective view showing the placement of the components.

Figs. 11(a) to 11(c) each are a Poincare Sphere showing the manner of polarization conversion from linearly polarized light into circularly polarized light by the first and second retardation layers; Fig. 11(a) is the Poincare Sphere seen from the north pole; Fig. 11(b) is the Poincare Sphere seen from the equator; and Fig. 11(c) is an enlarged view of the portion indicated by the dot line in Fig. 11(b).

Fig. 12 is a schematic perspective view showing the multilayer structure (except for the liquid crystal cell) at the reflective display region of each of the first and second liquid crystal display devices of the present invention.

Fig. 13 is a graph showing the optimum relationship between the retardation R1xy (nm) of the first retardation layer and the angle $\alpha$ (°) formed by the in-plane slow axis of the first retardation layer and the in-plane slow axis of the second retardation layer determined by the use of the liquid crystal display device of Fig. 12.

Fig. 14 is a graph showing the optimum relationship between the retardation R1xy (nm) of the first retardation layer and the retardation R2xy (nm) of the second retardation layer determined by the use of the liquid crystal display device of Fig. 12.

EXPLANATION OF SYMBOLS

1, 1a to 1i, 2, 2a to 2i: Substrate
3, 3a to 3i: First retardation layer
4, 4a to 4i: Liquid crystal layer
5, 5e: Reflective member
5a to 5d, 5f to 5i: Reflective electrode
6, 6a to 6i: Second retardation layer
7: Transparent member (transparent electrode)
7a to 7i: Transparent electrode
8Ra to 8Ri: Red color layer
8Ga to 8Gi: Green color layer
8Ba to 8Bi: Blue color layer
9a to 9i: Protecting layer
10, 10a to 10i: Back-side polarizer
11: reflector
11i: Third retardation layer
12: Transparent resin layer
20, 20a to 20i: Viewing-side polarizer
30, 30a to 30i: Illumination backlight
50, 50a to 50i: Liquid crystal cell
100, 100a to 100e, 500f to 500i: Liquid crystal display device a: Absorption axis
s: In-plane slow axis

**Claims**

**1.** A transflective liquid crystal display device for transmissive display and reflective display, comprising:

a back-side polarizer;
a liquid crystal cell;
a viewing-side polarizer;
a first retardation layer; and
a second retardation layer,
the liquid crystal cell including a pair of substrates and a liquid crystal layer disposed between the pair of substrates, and the liquid crystal layer containing liquid crystal molecules aligned perpendicular to the substrates when no voltage is applied,
the viewing-side polarizer having an absorption axis orthogonal to an absorption axis of the back-side polarizer,
the first retardation layer being disposed between the liquid crystal layer and the viewing-side polarizer at a transmissive display region and a reflective display region, having an Nz coefficient satisfying $1.5 \leq Nz \leq 9.0$ at a wavelength of 550 nm, having an in-plane slow axis orthogonal to the absorption axis of the viewing-side polarizer, and having an in-plane retardation Re(550) satisfying 20 nm $\leq$ Re(550) $\leq$ 80 nm at a wavelength of 550 nm, and
the second retardation layer being disposed between the first retardation layer and the viewing-side polarizer at the reflective display region, and converting linearly polarized light incident from the viewing-side polarizer into circularly polarized light together with the first retardation layer when no voltage is applied.

**2.** A transflective liquid crystal display device for transmissive display and reflective display, comprising:

a back-side polarizer;
a liquid crystal cell;
a viewing-side polarizer;
a first retardation layer; and
a second retardation layer,
the liquid crystal cell including a pair of substrates and a liquid crystal layer disposed between the pair of substrates, and the liquid crystal layer containing liquid crystal molecules aligned perpendicular to the substrates when no voltage is applied,
the viewing-side polarizer having an absorption axis orthogonal to an absorption axis of the back-side polarizer,
the first retardation layer being disposed between the liquid crystal layer and the back-side polarizer at a transmissive display region and a reflective display region, having an Nz coefficient satisfying $1.5 \leq Nz \leq 9.0$ at a wavelength of 550 nm, having an in-plane slow axis parallel to the absorption axis of the viewing-side polarizer, and having an in-plane retardation Re(550) satisfying 20 nm $\leq$ Re(550) $\leq$ 80 nm at a wavelength of 550 nm, and
the second retardation layer being disposed between the first retardation layer and the viewing-side polarizer at the reflective display region, and converting linearly polarized light incident from the viewing-side polarizer into circularly polarized light together with the first retardation layer when no voltage is applied.

**3.** The liquid crystal display device according to claim 1 or 2,
wherein at least one of the first retardation layer and the second retardation layer is disposed in the liquid crystal cell.

**4.** The liquid crystal display device according to any one of claims 1 to 3,
wherein the liquid crystal display device satisfies $44+0.2\times R1xy \leq \alpha \leq 54+0.2\times R1xy$ (1)
wherein R1xy (nm) represents an in-plane retardation of the first retardation layer at a wavelength of 550 nm, and $\alpha$ (°) represents an angle formed by the in-plane slow axis of the first retardation layer and the in-plane slow axis of the second retardation layer.

**5.** The liquid crystal display device according to any one of claims 1 to 4,
wherein the liquid crystal display device satisfies $1.015\times R1xy+100 \leq R2xy \leq 1.015\times R1xy+125$ (2)
wherein R1xy (nm) represents an in-plane retardation of the first retardation layer at a wavelength of 550 nm, and R2xy (nm) represents an in-plane retardation of the second retardation layer at a wavelength of 550 nm.

Fig. 1

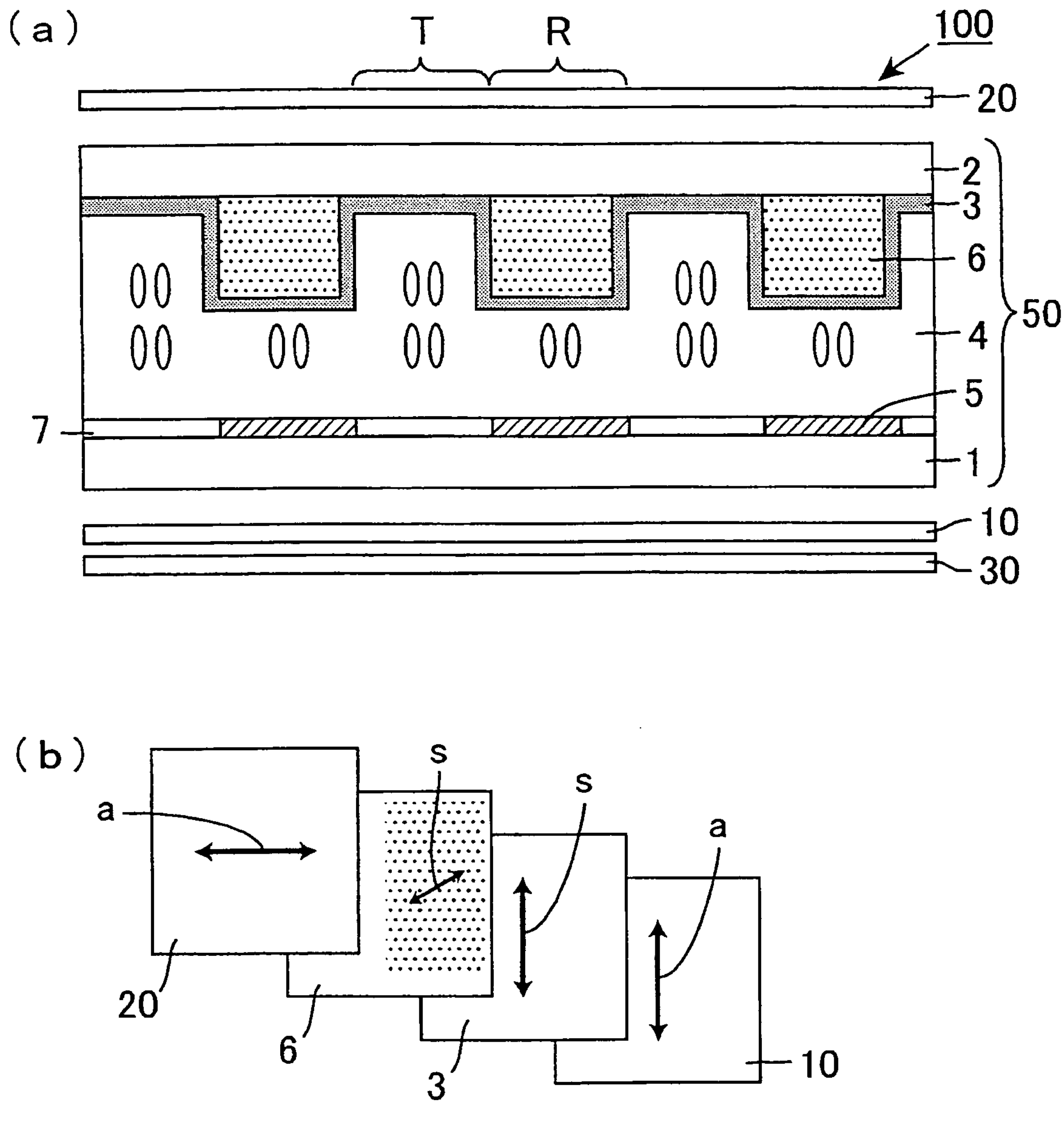

Fig. 2

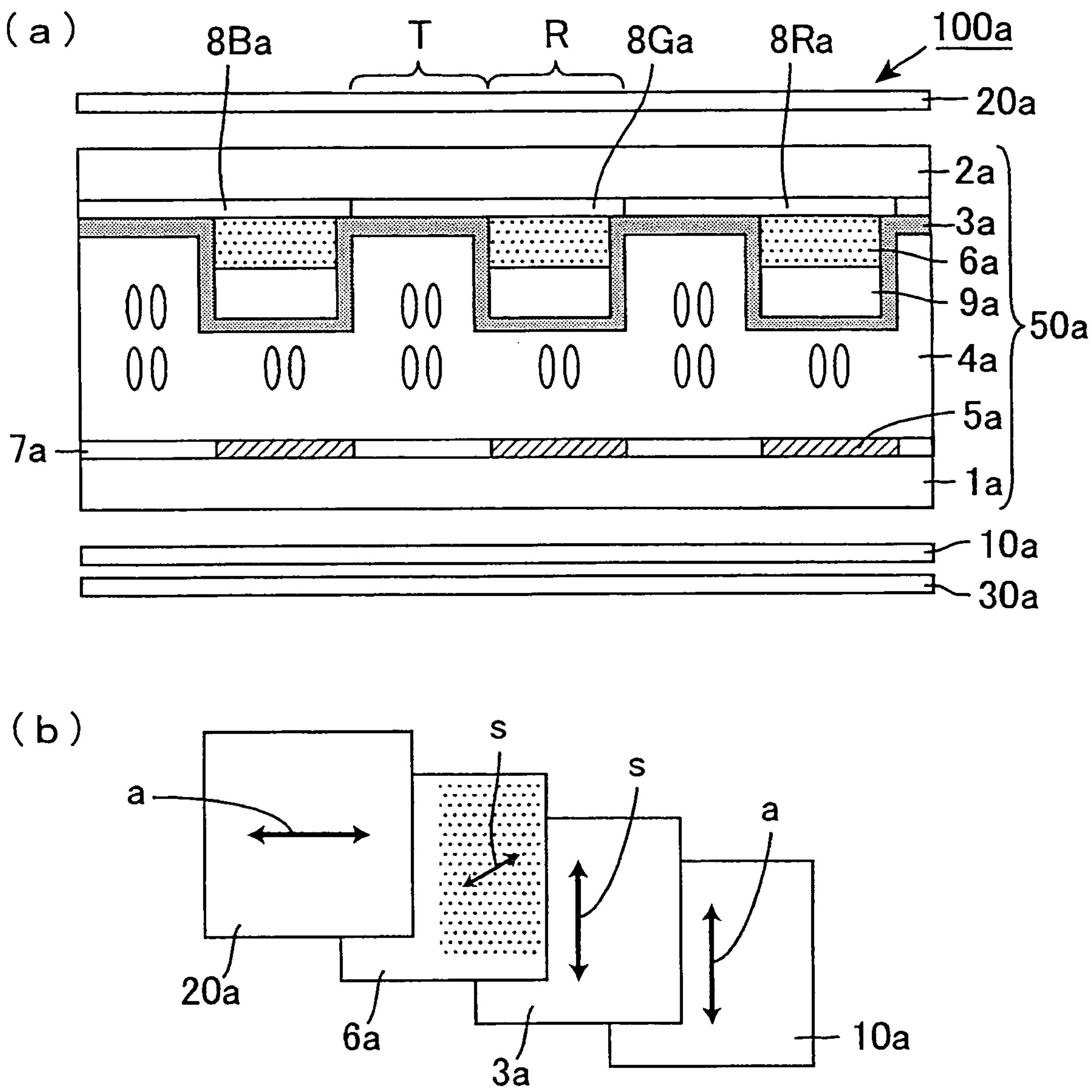
(a)
8Ba
T
R
8Ga
8Ra
100a
20a
2a
3a
6a
9a
50a
4a
5a
7a
1a
10a
30a
(b)
a
s
s
a
20a
6a
3a
10a

Fig. 3

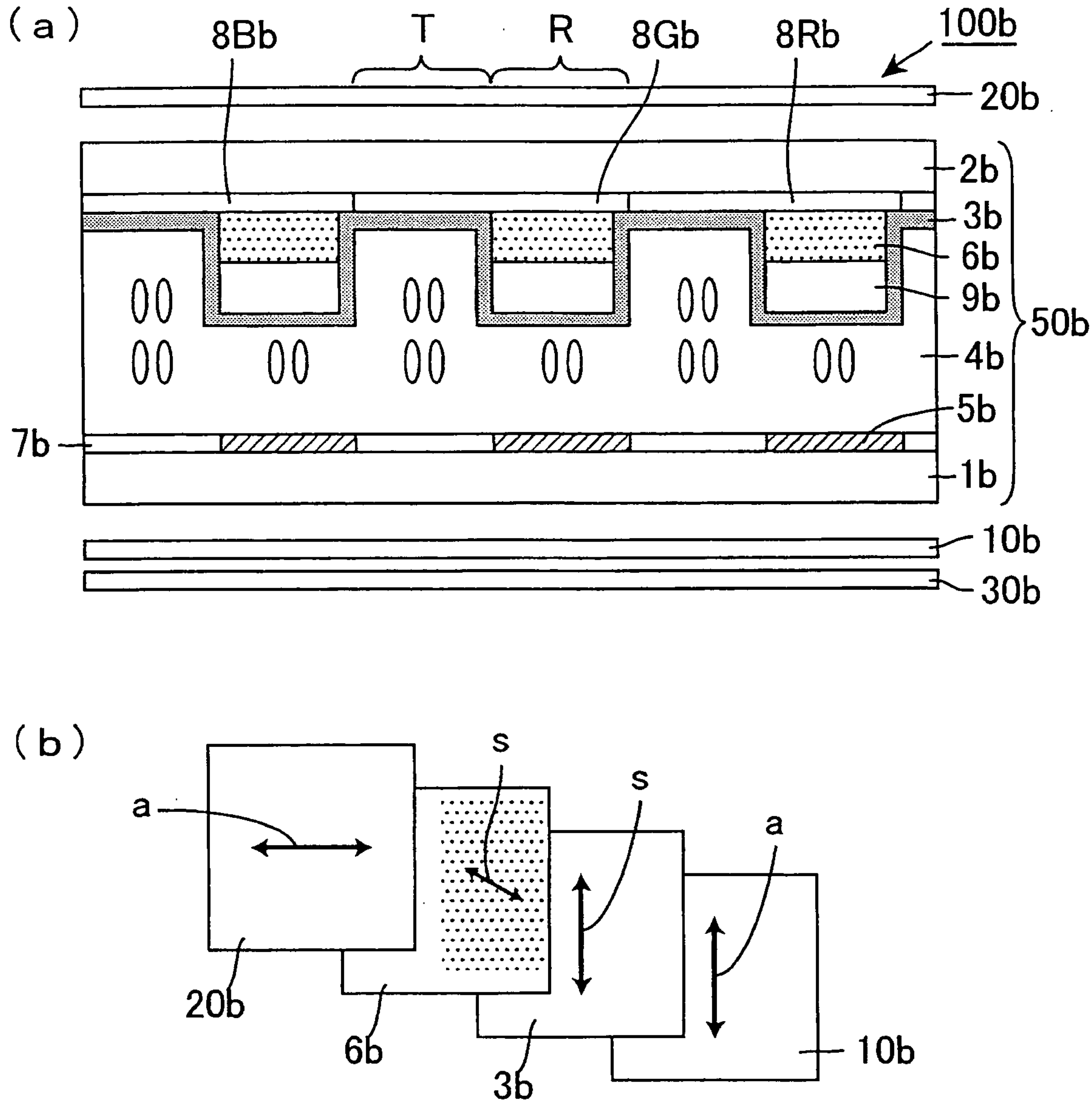
(a)
8Bb
T
R
8Gb
8Rb
100b
20b
2b
3b
6b
9b
50b
4b
5b
7b
1b
10b
30b
(b)
a
s
s
a
20b
6b
3b
10b

Fig. 4

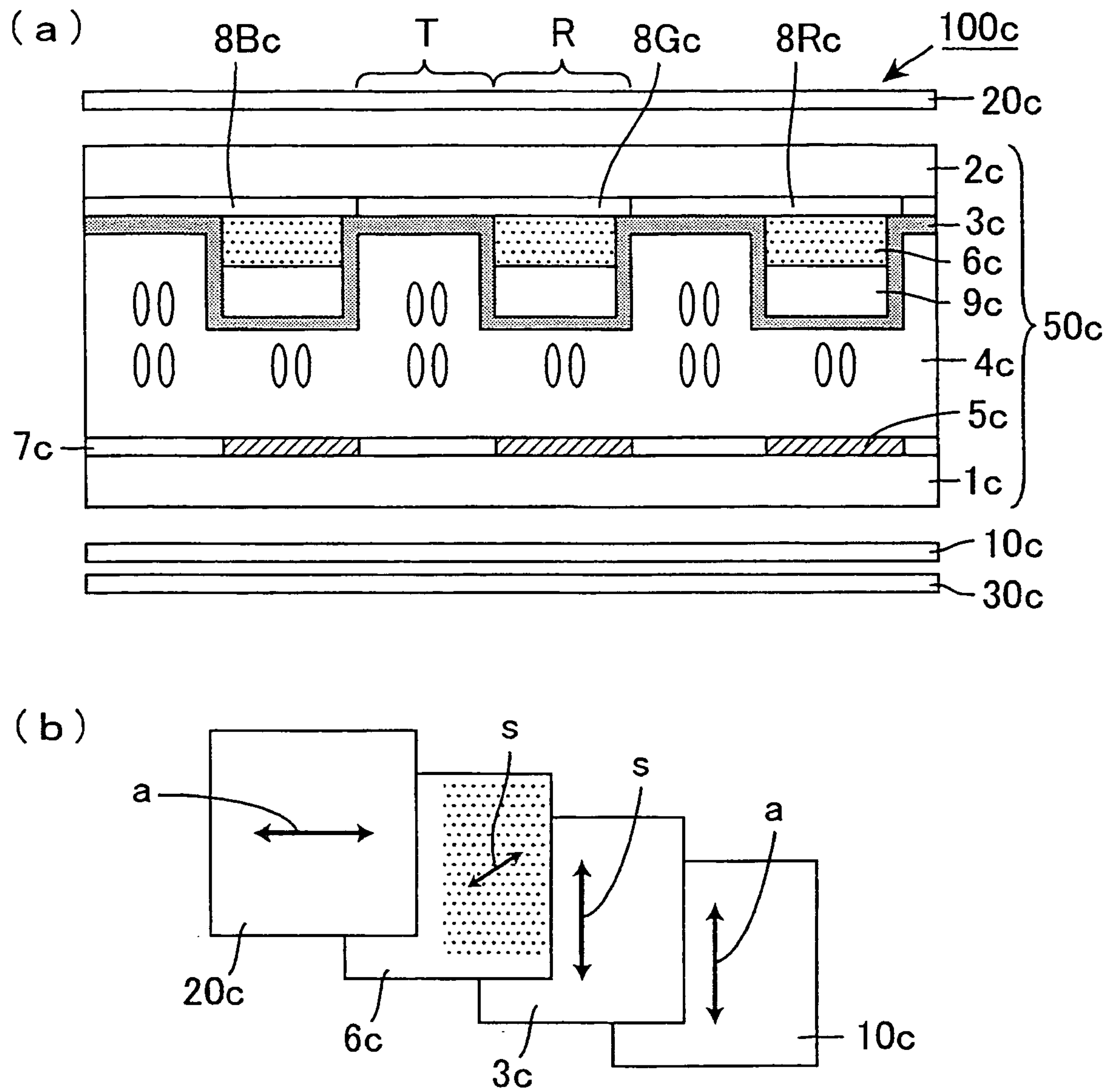
(a)
8Bc
T
R
8Gc
8Rc
100c
20c
2c
3c
6c
9c
50c
4c
5c
7c
1c
10c
30c
(b)
s
s
a
a
20c
6c
3c
10c

Fig. 5

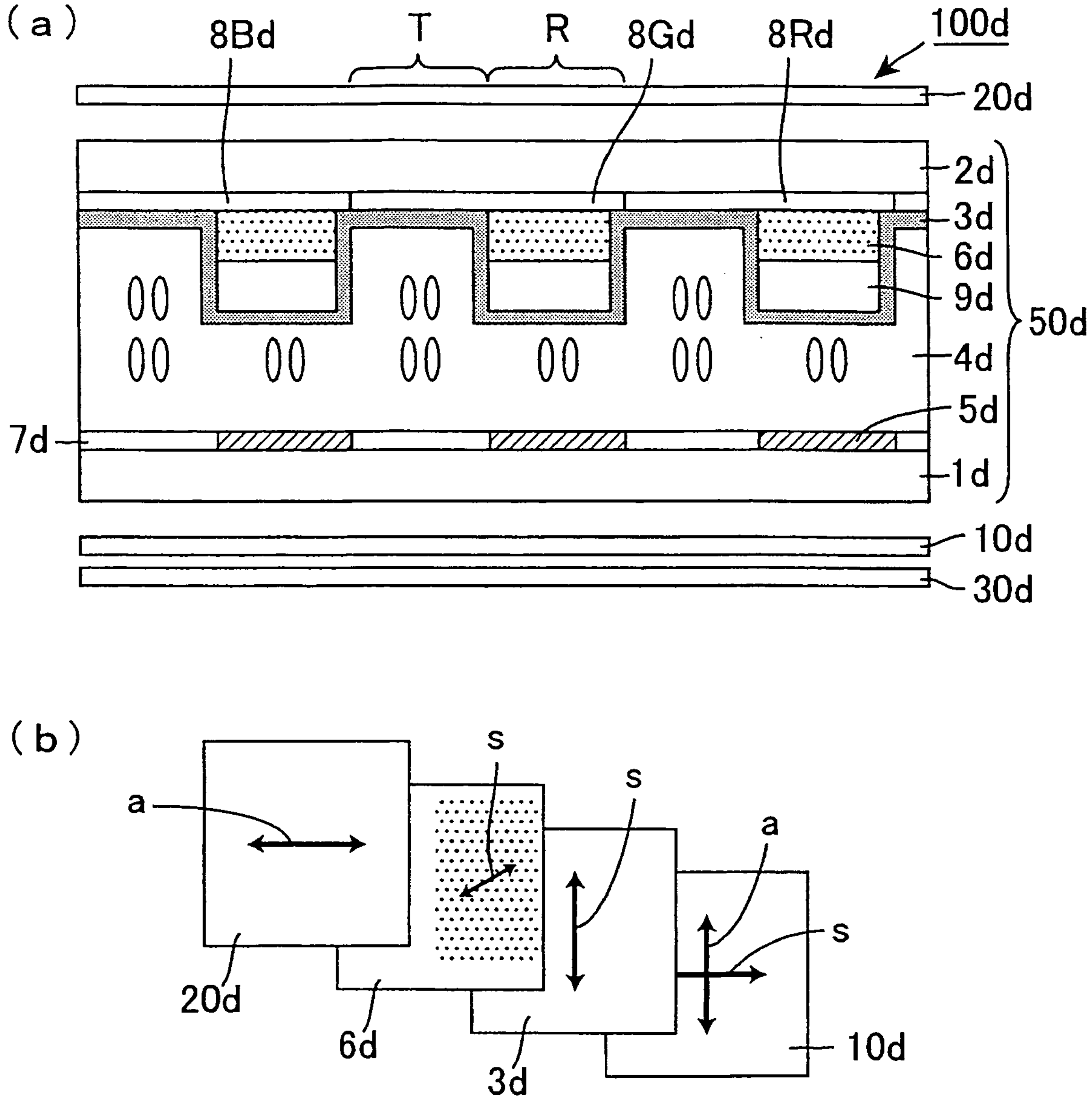
(a)
8Bd
T
R
8Gd
8Rd
100d
20d
2d
3d
6d
9d
50d
4d
5d
7d
1d
10d
30d
(b)
a
s
s
a
s
20d
6d
3d
10d

Fig. 6

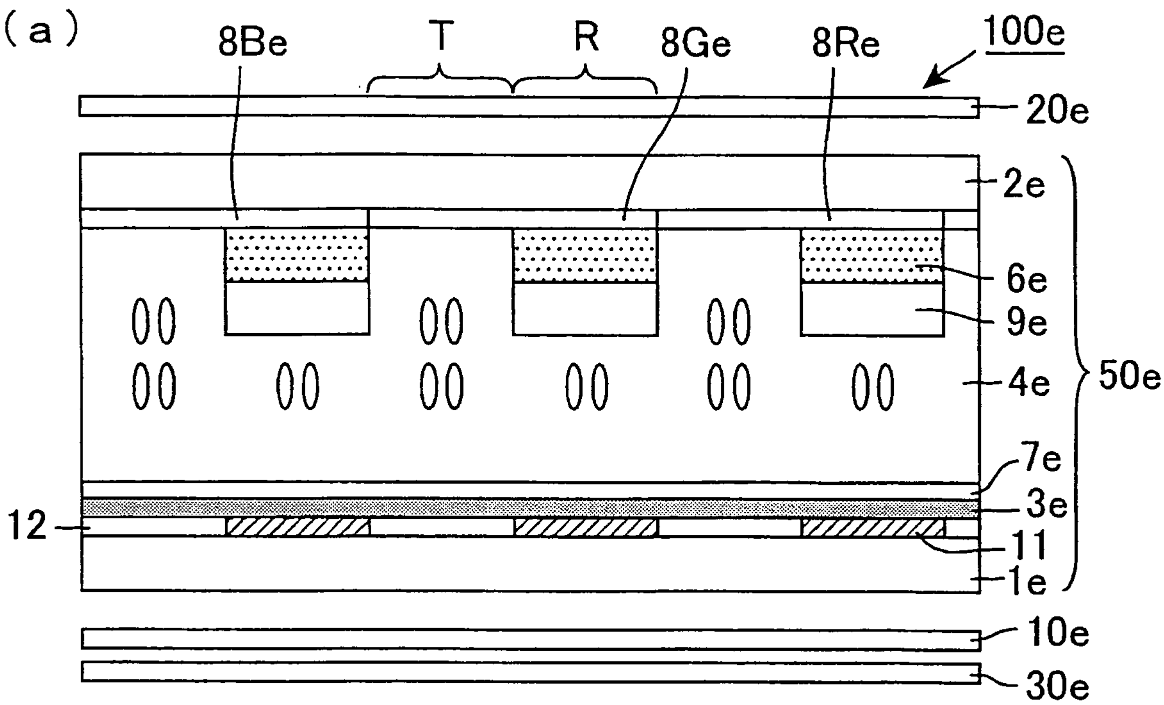
(a)
8Be
T
R
8Ge
8Re
100e
20e
2e
6e
9e
4e
50e
7e
3e
12
11
1e
10e
30e

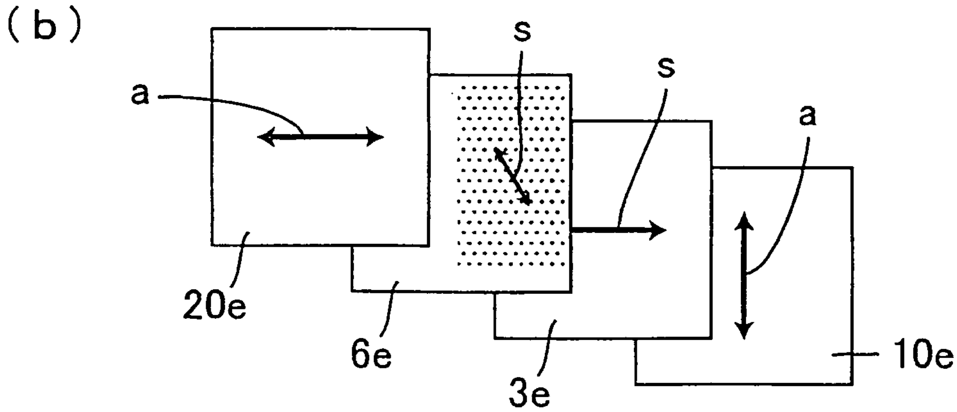
(b)
s
s
a
a
20e
6e
3e
10e

Fig. 7

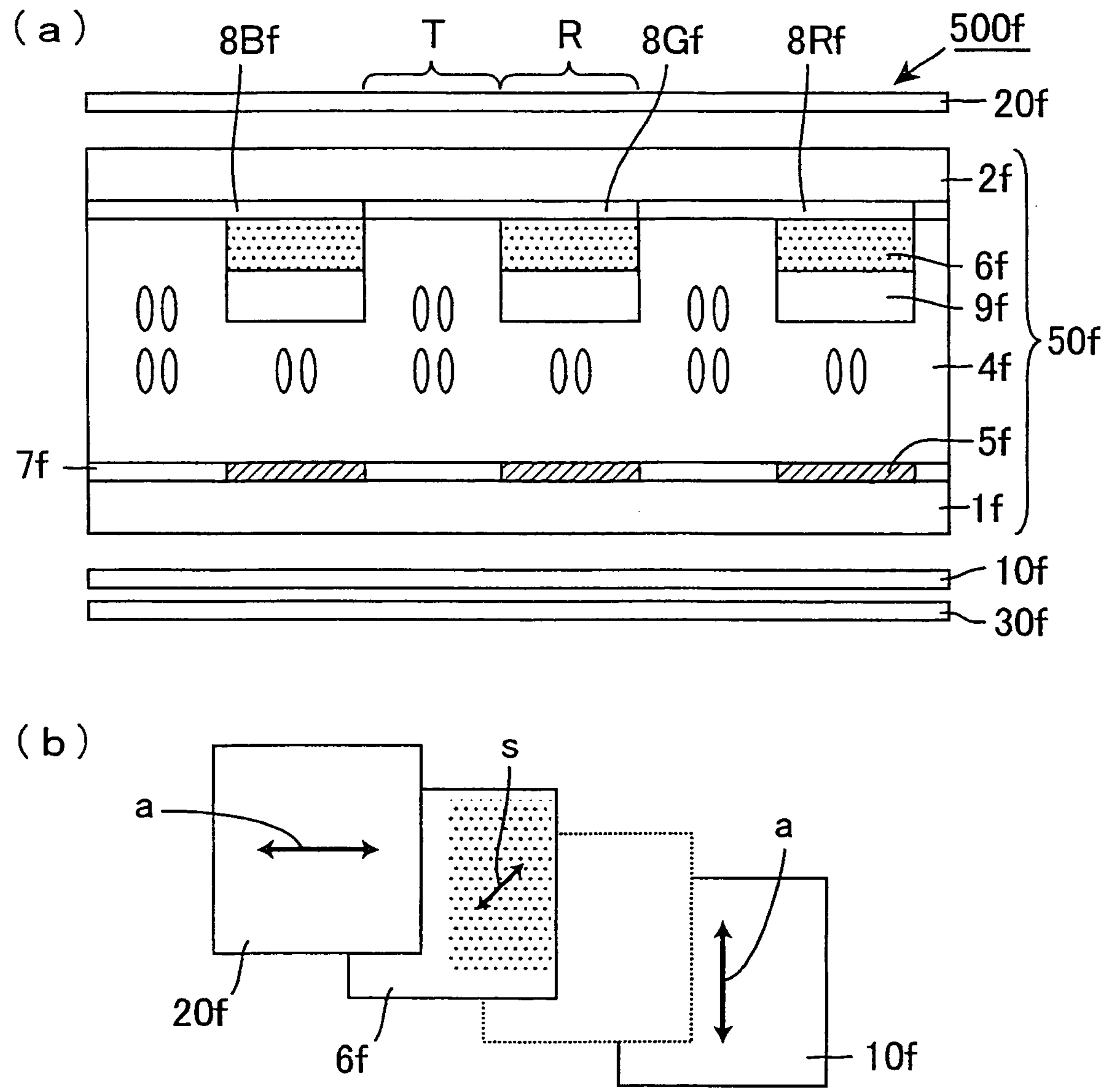
(a)
8Bf
T
R
8Gf
8Rf
500f
20f
2f
6f
9f
50f
4f
5f
7f
1f
10f
30f
(b)
a
s
a
20f
6f
10f

Fig. 8

(a)

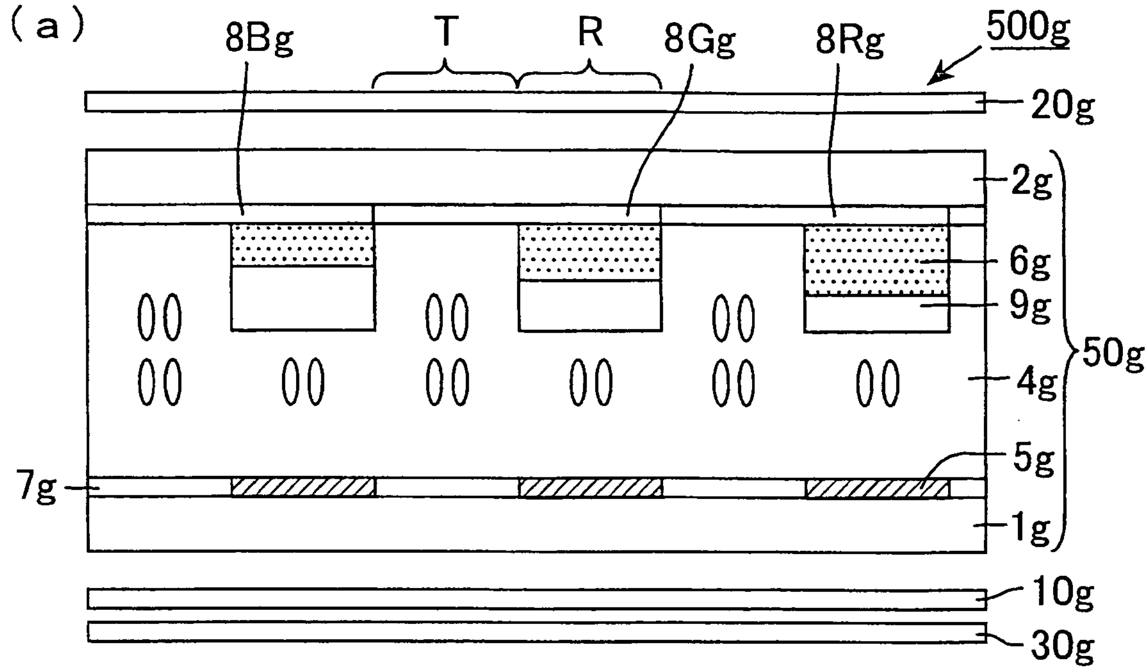
8Bg
T
R
8Gg
8Rg
500g
20g
2g
6g
9g
50g
4g
5g
7g
1g
10g
30g

(b)

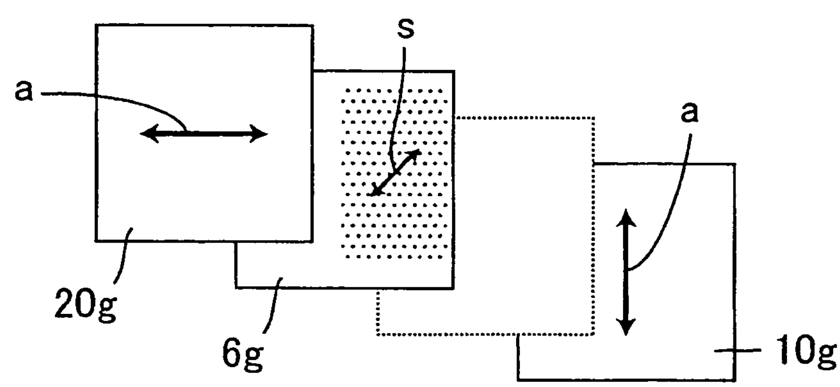
s
a
a
20g
6g
10g

Fig. 9

(a)

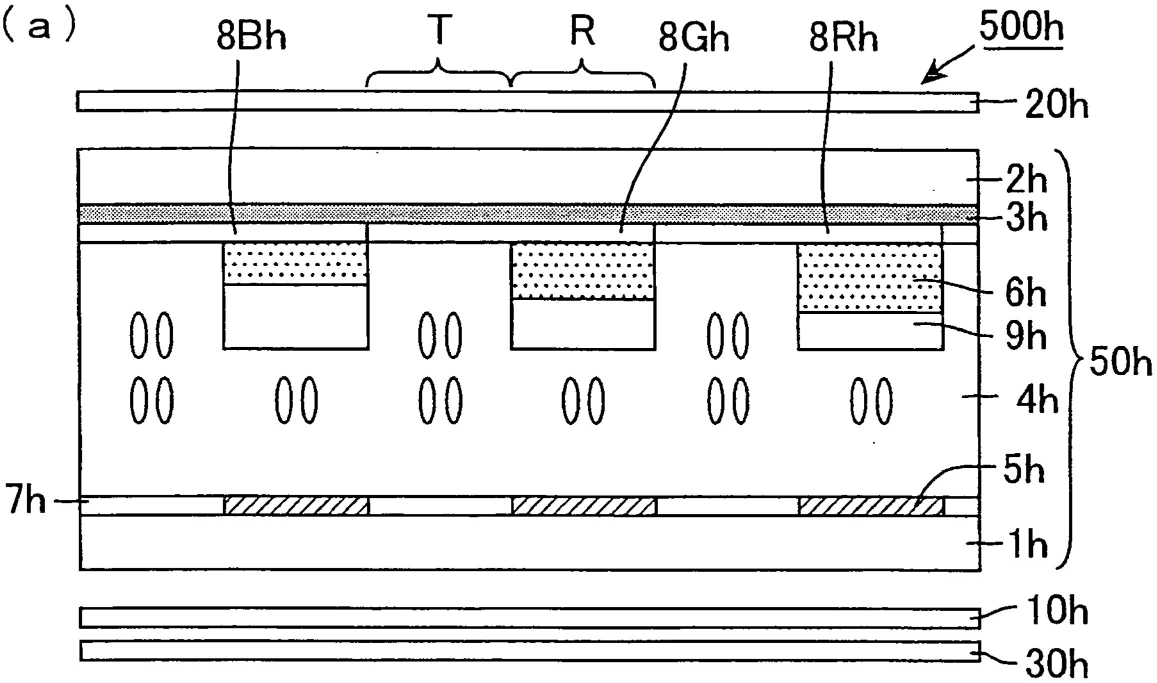
8Bh
T
R
8Gh
8Rh
500h
20h
2h
3h
6h
9h
50h
4h
5h
7h
1h
10h
30h

(b)

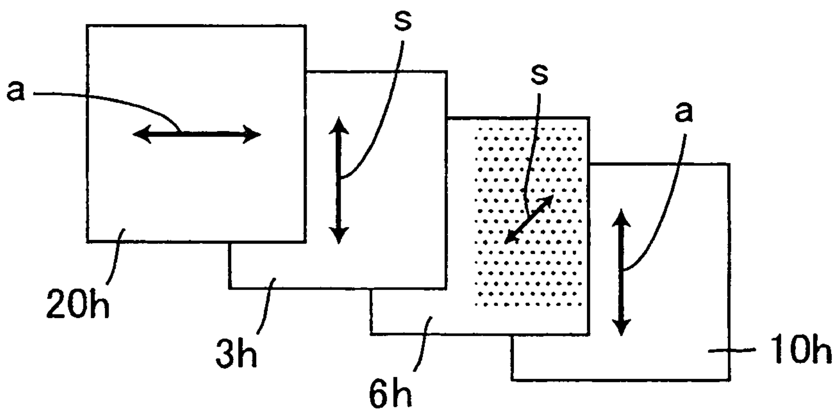
a
s
s
a
20h
3h
6h
10h

Fig. 10

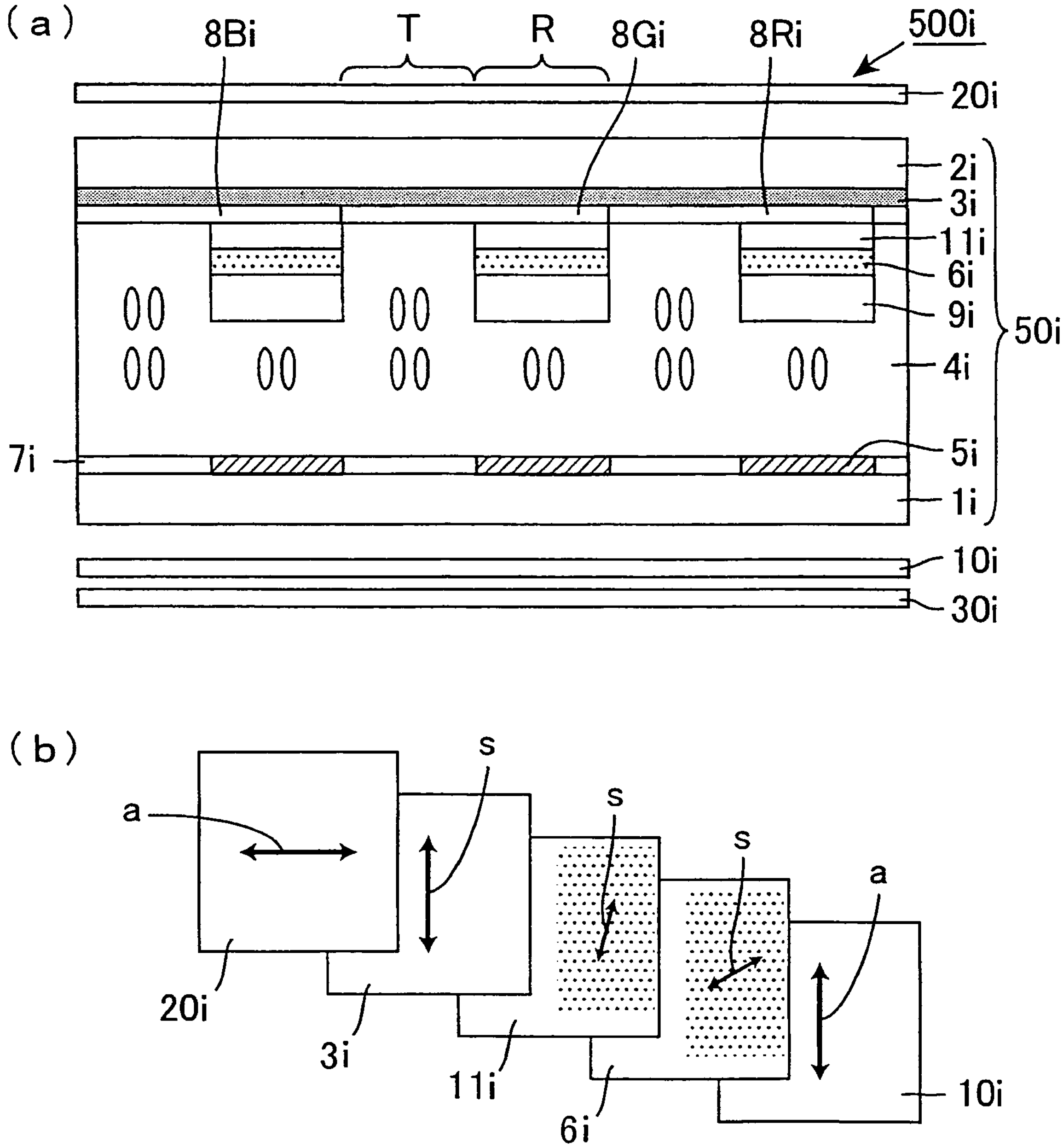
(a)
8Bi
T
R
8Gi
8Ri
500i
20i
2i
3i
11i
6i
9i
50i
4i
7i
5i
1i
10i
30i
(b)
a
s
s
s
a
20i
3i
11i
6i
10i

Fig. 11

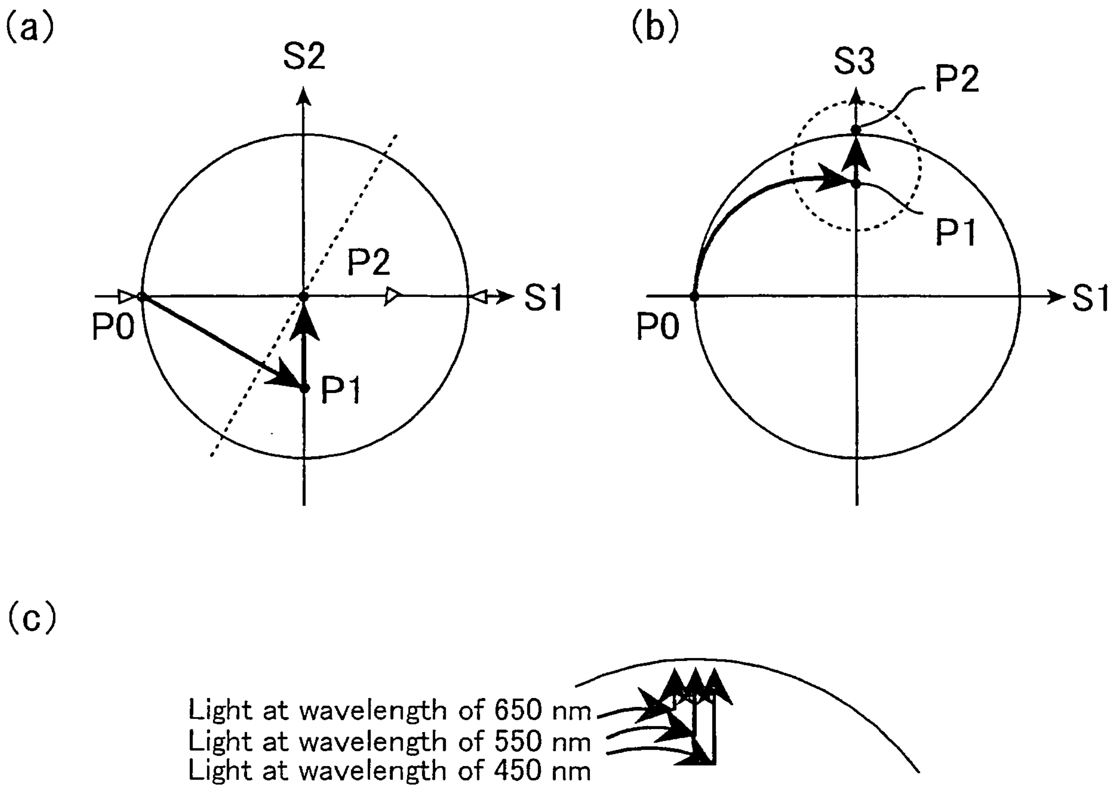
(a)
S2
P2
P0
S1
P1
(b)
S3
P2
P1
P0
S1
(c)
Light at wavelength of 650 nm
Light at wavelength of 550 nm
Light at wavelength of 450 nm

Fig. 12

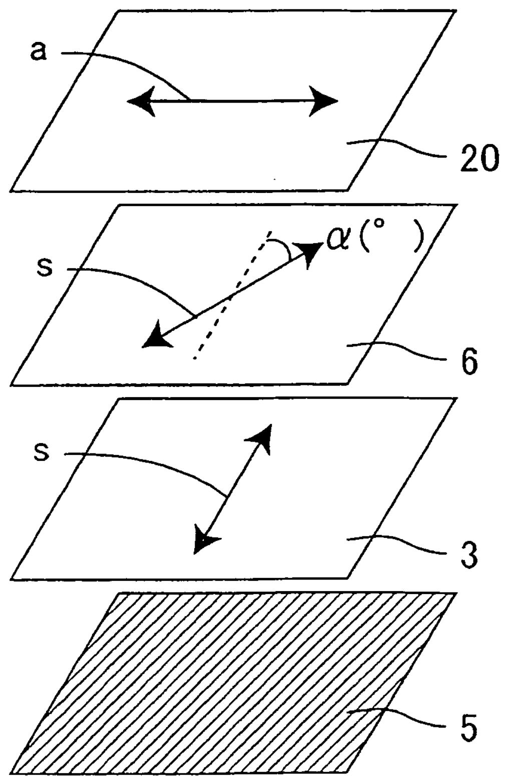
a
20
s
α(° )
6
s
3
5

Fig. 13

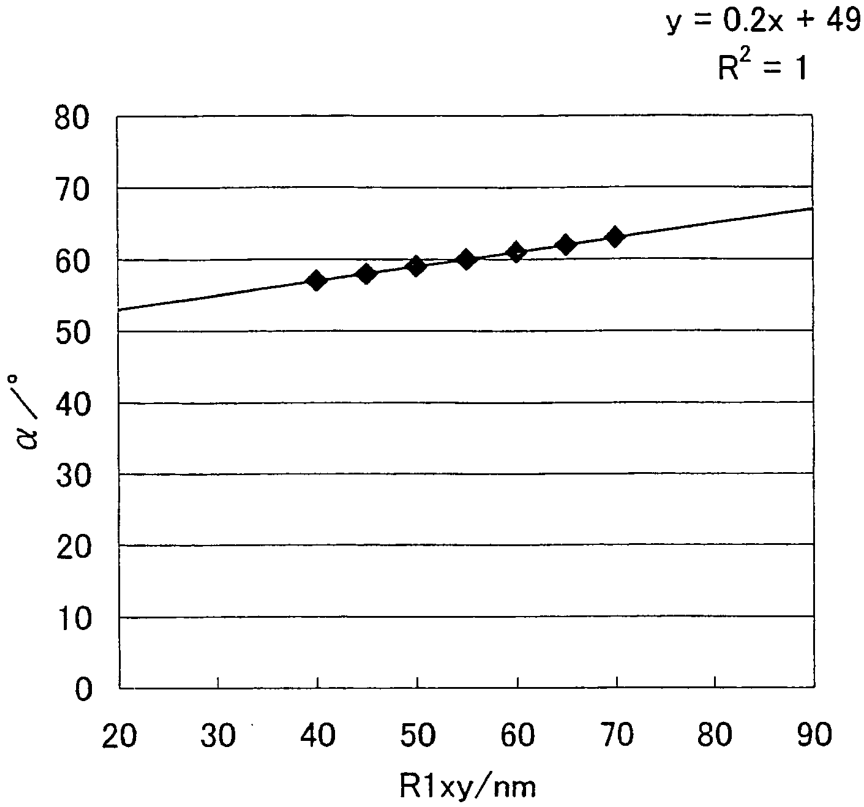
y = 0.2x + 49
R2 = 1
80
70
60
50
40
30
20
10
0
α／°
20
30
40
50
60
70
80
90
R1xy/nm

Fig. 14

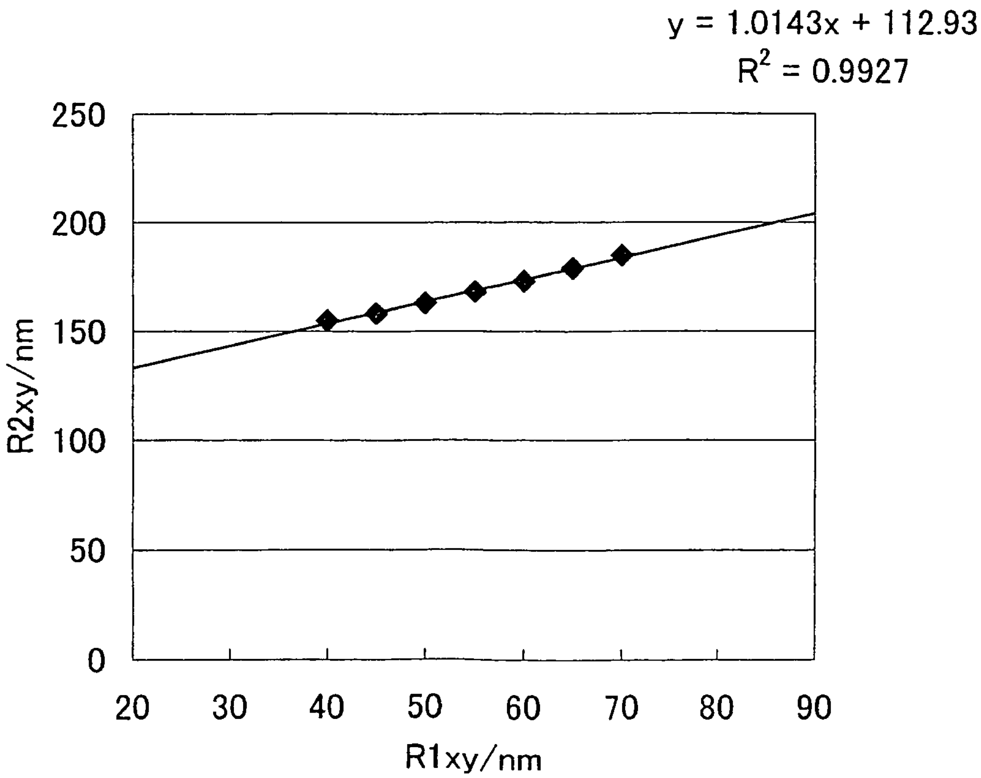
y = 1.0143x + 112.93
R2 = 0.9927
250
200
150
100
50
0
R2xy/nm
20
30
40
50
60
70
80
90
R1xy/nm

**INTERNATIONAL SEARCH REPORT**

International application No.
PCT/JP2008/067313

A. CLASSIFICATION OF SUBJECT MATTER
*G02F1/1335*(2006.01)i, *G02B5/30*(2006.01)i, *G02F1/13363*(2006.01)i

According to International Patent Classification (IPC) or to both national classification and IPC

B. FIELDS SEARCHED

Minimum documentation searched (classification system followed by classification symbols)
G02F1/1335, G02B5/30, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/063629 A1 (Sharp Corp.),<br>07 June, 2007 (07.06.07),<br>Par. Nos. [0005], [0022], [0068] to [0077];<br>Fig. 3<br>(Family: none) | 1-5 |
| Y | JP 2005-513241 A (Merck Patent GmbH.),<br>12 May, 2005 (12.05.05),<br>Par. Nos. [0055] to [0058], [0112]; Fig. 9B<br>& US 2005/0219447 A1 & EP 1453933 A<br>& WO 2003/054111 A1 & DE 60205942 D<br>& DE 60205942 T & KR 10-2004-0066159 A<br>& AT 303422 T & CN 1602345 A<br>& TW 276679 B | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 October, 2008 (15.10.08) | 28 October, 2008 (28.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000029010 A
- JP 2000035570 A
- JP 2003322857 A
- JP 2004004494 A
- WO 2007063629 A
- JP 2004240102 A
- JP 2005513241 A
- JP 2006323069 A
- JP 2008007278 A